# EUROPEAN PATENT APPLICATION

(11) **EP 4 564 899 A1**
(43) Date of publication of application: **04.06.2025**
(21) Application number: 23851442.6
(22) Date of filing: 29.06.2023
(51) Int. Cl.: H04W 24/10

(54) **DELAY CONTROL METHOD AND APPARATUS**

(30) Priority: 08.08.2022 CN 202210941853
(71) Applicant: Huawei Technologies Co., Ltd., Shenzhen, Guangdong 518129 (CN)
(72) Inventor: PAN, Qi, Shenzhen, Guangdong 518129 (CN); SCHRAMM, Mirko, Shenzhen, Guangdong 518129 (CN); NI, Hui, Shenzhen, Guangdong 518129 (CN); HUANG, Zhenglei, Shenzhen, Guangdong 518129 (CN)
(74) Representative: Maiwald GmbH
(86) International application number: PCT/CN2023/103802
(87) International publication number: WO 2024/032215

(57) **Abstract**

This application provides a latency control method, and an apparatus. The method includes: An access network element receives, from a session management network element, a profile of an uplink quality of service flow and a profile of a downlink quality of service flow. When a sum of a current data transmission latency of the uplink quality of service flow and a current data transmission latency of the downlink quality of service flow does not satisfy a round-trip latency requirement of a service, the access network element determines, from the profile of the uplink quality of service flow and the profile of the downlink quality of service flow, a target data packet delay budget of the uplink quality of service flow and a target data packet delay budget of the downlink quality of service flow. The target data packet delay budget of the uplink quality of service flow and the target data packet delay budget of the downlink quality of service flow satisfy the round-trip latency requirement. According to the latency control method and the apparatus that are provided in this application, a round-trip latency can be controlled based on a service requirement.

## Description

This application claims priority to Chinese Patent Application No. 202210941853.X, filed with China National Intellectual Property Administration on August 8, 2022 and entitled "LATENCY CONTROL METHOD, AND APPARATUS", which is incorporated herein by reference in its entirety.

### TECHNICAL FIELD

This application relates to the communication field, and more specifically, to a latency control method, and an apparatus.

### BACKGROUND

Currently, more services impose an extremely high requirement on a round-trip (round-trip, RT) latency in data transmission. The round-trip latency is a sum of an uplink transmission latency and a downlink transmission latency. Once the round-trip latency in the data transmission cannot satisfy a service requirement, service running may be greatly affected, and consequently, user experience is affected.

For example, a service that has a high requirement on the round-trip latency may be a real-time media service, including virtual reality, augmented reality, extended reality (extended reality, XR), or the like. Using an XR service as an example, a round-trip latency required by the XR service may be understood as a latency from detecting a head/hand motion to rendering a corresponding new picture by an image engine and displaying the picture on a screen. If the latency is excessively high, a user may consequently feel dizzy, and experience of the XR service is affected.

Therefore, how to control the round-trip latency based on the service requirement is an urgent problem to be resolved.

### SUMMARY

This application provides a latency control method, and an apparatus, to control a round-trip latency based on a service requirement.

With reference to the first aspect, in some implementations of the first aspect,

According to a first aspect, a latency control method is provided. The method may be performed by an access network element, or may be performed by a component (for example, a chip or a circuit) of the access network element. This is not limited in this application. For ease of description, an example in which the method is performed by an access network element is used for description below.

The method may include: An access network element receives, from a session management network element, a profile of an uplink quality of service flow and a profile of a downlink quality of service flow. The uplink quality of service flow and the downlink quality of service flow are respectively for transmitting uplink data and downlink data of a service. When a sum of a current data transmission latency of the uplink quality of service flow and a current data transmission latency of the downlink quality of service flow does not satisfy a round-trip latency requirement of the service, the access network element determines, from the profile of the uplink quality of service flow and the profile of the downlink quality of service flow, a target data packet delay budget of the uplink quality of service flow and a target data packet delay budget of the downlink quality of service flow. The target data packet delay budget of the uplink quality of service flow and the target data packet delay budget of the downlink quality of service flow satisfy the round-trip latency requirement.

In the foregoing solution, the access network element determines, based on the current data transmission latency of the uplink quality of service flow and the current data transmission latency of the downlink quality of service flow, the target data packet delay budget of the uplink quality of service flow and the target data packet delay budget of the downlink quality of service flow from the profile of the uplink quality of service flow and the profile of the downlink quality of service flow that are received from a core network side. In this way, a round-trip latency is efficiently controlled based on a service requirement in a timely manner. In addition, in the foregoing solution, the access network element updates a data packet delay budget of the uplink quality of service flow and a data packet delay budget of the downlink quality of service flow. In comparison with that a policy control network element updates the data packet delay budget of the uplink quality of service flow and the data packet delay budget of the downlink quality of service flow, signaling interaction between the access network element and a core network can be reduced, overheads are reduced, and duration of controlling the round-trip latency can be shortened. In addition, after the access network element determines the target data packet delay budget of the uplink quality of service flow and the target data packet delay budget of the downlink quality of service flow, a case in which an updated quality of service profile is not authorized by the core network does not occur. Therefore, the updated quality of service profile may not be sent to the core network, so that the signaling interaction is further reduced, and the overheads are reduced.

With reference to the first aspect, in some implementations of the first aspect, the profile of the uplink quality of service flow includes a plurality of groups of uplink quality of service profiles, and the profile of the downlink quality of service flow includes a plurality of groups of downlink quality of service profiles. Each group of uplink quality of service profiles includes a data packet delay budget of the uplink quality of service flow, and each group of downlink quality of service profiles includes a data packet delay budget of the downlink quality of service flow. Data packet delay budgets that are of the uplink quality of service flow and that are included in the plurality of groups of uplink quality of service profiles include the target data packet delay budget of the uplink quality of service flow. Data packet delay budgets that are of the downlink quality of service flow and that are included in the plurality of groups of downlink quality of service profiles include the target data packet delay budget of the downlink quality of service flow. That the target data packet delay budget of the uplink quality of service flow and the target data packet delay budget of the downlink quality of service flow satisfy the round-trip latency requirement includes: A sum of the target data packet delay budget of the uplink quality of service flow and the target data packet delay budget of the downlink quality of service flow satisfies the round-trip latency requirement.

In the foregoing solution, the core network configures, for the radio access network element, the plurality of groups of uplink quality of service profiles and the plurality of groups of downlink quality of service profiles, and the radio access network element can autonomously select the target data packet delay budget of the uplink quality of service flow and the target data packet delay budget of the downlink quality of service flow from the plurality of groups of uplink quality of service profiles and the plurality of groups of downlink quality of service profiles. In this way, the access network element can dynamically and separately determine the target data packet delay budget of the uplink quality of service flow and the target data packet delay budget of the downlink quality of service flow based on a real-time network transmission status. In addition, in the foregoing solution, a case in which an updated uplink quality of service profile or an updated downlink quality of service profile is not authorized by the core network does not occur, so that quality of service profile updating performed by the core network does not need to be waited, and a round-trip control logic is simplified. The signaling interaction is further reduced, the overheads are reduced, and a service round-trip latency is quickly and flexibly controlled and guaranteed.

It should be understood that, that each group of uplink quality of service profiles includes a data packet delay budget of the uplink quality of service flow may be understood in a plurality of manners.

In a possible implementation, the data packet delay budget included in each group of uplink quality of service profiles is a specific data packet delay budget value, and the data packet delay budget that indicates the downlink quality of service flow and that is included in each group of downlink quality of service profiles is also specific data.

In the foregoing solution, the access network element more directly obtains the data packet delay budget included in each group of uplink quality of service profiles. This solution is simpler and more efficient.

In another possible implementation, each group of uplink quality of service profiles includes information indicating the data packet delay budget of the uplink quality of service flow, and each group of downlink quality of service profiles includes information indicating the data packet delay budget of the downlink quality of service flow. For example, the information may be fifth generation quality of service identifier (5th generation quality of service identifier, 5QI) information.

In the foregoing solution, an implementation in which the core network configures a data packet delay budget for the radio access network element is more flexible, and information overheads can be reduced.

It should be further understood that the target data packet delay budget of the uplink quality of service flow and the target data packet delay budget of the downlink quality of service flow may be specific data packet delay budget values, or may be information indicating the target data packet delay budget of the uplink quality of service flow and the target data packet delay budget of the downlink quality of service flow. For example, the information may be 5QI information.

With reference to the first aspect, in some implementations of the first aspect, when the current data transmission latency of the uplink quality of service flow is greater than the data packet delay budget of the uplink quality of service flow, that the access network element determines, from the profile of the uplink quality of service flow and the profile of the downlink quality of service flow, a target data packet delay budget of the uplink quality of service flow and a target data packet delay budget of the downlink quality of service flow includes: The access network element selects, from the plurality of groups of uplink quality of service profiles, the target data packet delay budget of the uplink quality of service flow based on the current data transmission latency of the uplink quality of service flow. The target data packet delay budget of the uplink quality of service flow is greater than the current data transmission latency of the uplink quality of service flow. The access network element selects, from the plurality of groups of downlink quality of service profiles, the target data packet delay budget of the downlink quality of service flow based on the target data packet delay budget of the uplink quality of service flow and the round-trip latency requirement.

In the foregoing solution, when the current data transmission latency of the uplink quality of service flow is greater than the data packet delay budget of the uplink quality of service flow, the access network element adjusts the profile of the uplink quality of service flow, so that the target data packet delay budget of the uplink quality of service flow is greater than the current data transmission latency of the uplink quality of service flow, and therefore, quality of service of the uplink quality of service flow can be ensured, and user experience is improved. The access network element can determine the target data packet delay budget of the uplink quality of service flow and the target data packet delay budget of the downlink quality of service flow in a more real-time and more flexible manner, so that the round-trip latency requirement of the service is ensured, and service experience of a user is improved.

With reference to the first aspect, in some implementations of the first aspect, when the current data transmission latency of the downlink quality of service flow is greater than the data packet delay budget of the downlink quality of service flow, that the access network element determines, from the profile of the uplink quality of service flow and the profile of the downlink quality of service flow, a target data packet delay budget of the uplink quality of service flow and a target data packet delay budget of the downlink quality of service flow includes: The access network element selects, from the plurality of groups of downlink quality of service profiles, the target data packet delay budget of the downlink quality of service flow based on the current data transmission latency of the downlink quality of service flow. The target data packet delay budget of the downlink quality of service flow is greater than the current data transmission latency of the downlink quality of service flow. The access network element selects, from the plurality of groups of uplink quality of service profiles, the target data packet delay budget of the uplink quality of service flow based on the target data packet delay budget of the downlink quality of service flow and the round-trip latency requirement.

In the foregoing solution, when the current data transmission latency of the downlink quality of service flow is greater than the data packet delay budget of the downlink quality of service flow, the access network element adjusts the profile of the downlink quality of service flow, so that the target data packet delay budget of the downlink quality of service flow is greater than the current data transmission latency of the downlink quality of service flow, and therefore, quality of service of the downlink quality of service flow can be ensured, and user experience is improved. The access network element can determine the target data packet delay budget of the uplink quality of service flow and the target data packet delay budget of the downlink quality of service flow in a more real-time and more flexible manner, so that the round-trip latency requirement of the service is ensured, and service experience of a user is improved.

With reference to the first aspect, in some implementations of the first aspect, that the access network element determines, from the profile of the uplink quality of service flow and the profile of the downlink quality of service flow, a target data packet delay budget of the uplink quality of service flow and a target data packet delay budget of the downlink quality of service flow includes: The access network element generates a plurality of quality of service profile pairs based on the round-trip latency requirement, the plurality of groups of uplink quality of service profiles, and the plurality of groups of downlink quality of service profiles. Each quality of service profile pair includes an uplink quality of service profile and a downlink quality of service profile. In each quality of service profile pair, a sum of a data packet delay budget that is of the uplink quality of service flow and that is in the uplink quality of service profile and a data packet delay budget that is of the downlink quality of service flow and that is in the downlink quality of service profile satisfies the round-trip latency requirement. Data packet delay budgets that are of the uplink quality of service flow and that are included in the plurality of quality of service profile pairs include the target data packet delay budget of the uplink quality of service flow. Data packet delay budgets that are of the downlink quality of service flow and that are included in the plurality of quality of service profile pairs include the target data packet delay budget of the downlink quality of service flow. The access network element selects a target quality of service profile pair from the plurality of quality of service profile pairs. The target quality of service profile pair includes the data packet delay budget of the uplink quality of service flow and the target data packet delay budget of the downlink quality of service flow.

In the foregoing solution, the access network element can more efficiently determine the target data packet delay budget of the uplink quality of service flow and the target data packet delay budget of the downlink quality of service flow by determining the target quality of service profile pair. In addition, when the round-trip latency requirement of the service, the profile of the uplink quality of service flow, and the profile of the uplink quality of service flow remain unchanged, the access network element may generate the plurality of quality of service profile pairs only once. The access network element stores the plurality of quality of service profile pairs. When the sum of the current data transmission latency of the uplink quality of service flow and the current data transmission latency of the downlink quality of service flow does not satisfy the round-trip latency requirement of the service again, the plurality of quality of service profile pairs may be directly invoked. A real-time processing logic of the access network element is further simplified, and efficiency of controlling the round-trip latency is improved.

With reference to the first aspect, in some implementations of the first aspect, the profile of the uplink quality of service flow includes at least two uplink budget values of a data packet delay budget of the uplink quality of service flow, and the profile of the downlink quality of service flow includes at least two downlink budget values of a data packet delay budget of the downlink quality of service flow. The at least two uplink budget values include the target data packet delay budget of the uplink quality of service flow, and the at least two downlink budget values include the target data packet delay budget of the downlink quality of service flow.

In the foregoing solution, one profile of the uplink quality of service flow or one profile of the downlink quality of service flow each includes more than one data packet delay budget, so that a manner of configuring quality of service in an entire system is more flexible. In comparison with a manner in which the core network sends, to the access network element, a quality of service profile including only one fixed data packet delay budget, in the foregoing solution, more data packet delay budgets can be configured for the access network element when resource overheads are almost not increased, so that the access network element can dynamically re-determine, based on a real-time network transmission status, a data packet delay budget corresponding to the quality of service profile. In addition, after the access network element re-determines the data packet delay budget corresponding to the quality of service profile, a case in which an updated quality of service profile is not authorized by the core network does not occur, so that quality of service profile updating performed by the core network does not need to be waited, and a round-trip control logic is simplified. The signaling interaction is further reduced, the overheads are reduced, and a service round-trip latency is quickly and flexibly controlled and guaranteed.

With reference to the first aspect, in some implementations of the first aspect, when the current data transmission latency of the uplink quality of service flow is greater than the data packet delay budget of the uplink quality of service flow, that the access network element determines, from the profile of the uplink quality of service flow and the profile of the downlink quality of service flow, a target data packet delay budget of the uplink quality of service flow and a target data packet delay budget of the downlink quality of service flow includes: The access network element selects, from the at least two uplink budget values, the target data packet delay budget of the uplink quality of service flow based on the current data transmission latency of the uplink quality of service flow. The target data packet delay budget of the uplink quality of service flow is greater than the current data transmission latency of the uplink quality of service flow. The access network element selects, from the at least two downlink budget values, the target data packet delay budget of the downlink quality of service flow based on the target data packet delay budget of the uplink quality of service flow and the round-trip latency requirement of the service.

In the foregoing solution, when the current data transmission latency of the uplink quality of service flow is greater than the data packet delay budget of the uplink quality of service flow, the access network element adjusts the profile of the uplink quality of service flow, so that the target data packet delay budget of the uplink quality of service flow is greater than the current data transmission latency of the uplink quality of service flow, and therefore, quality of service of the uplink quality of service flow can be ensured, and user experience is improved. The access network element can determine the target data packet delay budget of the uplink quality of service flow and the target data packet delay budget of the downlink quality of service flow in a more real-time and more flexible manner, so that the round-trip latency requirement of the service is ensured, and service experience of a user is improved.

With reference to the first aspect, in some implementations of the first aspect, when the current data transmission latency of the downlink quality of service flow is greater than the data packet delay budget of the downlink quality of service flow, that the access network element determines, from the profile of the downlink quality of service flow and the profile of the uplink quality of service flow, a target data packet delay budget of the uplink quality of service flow and a target data packet delay budget of the downlink quality of service flow includes: The access network element selects, from the at least two downlink budget values, the target data packet delay budget of the downlink quality of service flow based on the current data transmission latency of the downlink quality of service flow. The target data packet delay budget of the downlink quality of service flow is greater than the current data transmission latency of the downlink quality of service flow. The access network element selects, from the at least two uplink budget values, the target data packet delay budget of the uplink quality of service flow based on the target data packet delay budget of the downlink quality of service flow and the round-trip latency requirement of the service.

In the foregoing solution, when the current data transmission latency of the downlink quality of service flow is greater than the data packet delay budget of the downlink quality of service flow, the access network element adjusts the profile of the downlink quality of service flow, so that the target data packet delay budget of the downlink quality of service flow is greater than the current data transmission latency of the downlink quality of service flow, and therefore, quality of service of the downlink quality of service flow can be ensured, and user experience is improved. The access network element can determine the target data packet delay budget of the downlink quality of service flow and the target data packet delay budget of the downlink quality of service flow in a more real-time and more flexible manner, so that the round-trip latency requirement of the service is ensured, and service experience of a user is improved.

With reference to the first aspect, in some implementations of the first aspect, the method further includes: The access network element receives the round-trip latency requirement from the session management network element.

In the foregoing solution, the access network element selects, based on the round-trip latency requirement of the service and from the profile of the uplink quality of service flow and the profile of the downlink quality of service flow that are delivered by the core network, the target data packet delay budget of the uplink quality of service flow and the target data packet delay budget of the downlink quality of service flow that meet the round-trip latency requirement, to further ensure control and guarantee of the service round-trip latency.

With reference to the first aspect, in some implementations of the first aspect, the profile of the uplink quality of service flow and the profile of the downlink quality of service flow include a plurality of quality of service profile pairs. Each quality of service profile pair includes an uplink quality of service profile and a downlink quality of service profile. In each quality of service profile pair, a sum of a data packet delay budget that is of the uplink quality of service flow and that is in the uplink quality of service profile and a data packet delay budget that is of the downlink quality of service flow and that is in the downlink quality of service profile satisfies the round-trip latency requirement. Data packet delay budgets that are of the uplink quality of service flow and that are included in the plurality of quality of service profile pairs include the target data packet delay budget of the uplink quality of service flow. Data packet delay budgets that are of the downlink quality of service flow and that are included in the plurality of quality of service profile pairs include the target data packet delay budget of the downlink quality of service flow.

In the foregoing solution, the core network sends, to the access network element, the plurality of quality of service profile pairs that are already determined based on the round-trip latency requirement of the service, so that the access network element can directly select a target profile pair based on the plurality of quality of service profile pairs.

With reference to the first aspect, in some implementations of the first aspect, that the access network element determines, from the profile of the uplink quality of service flow and the profile of the downlink quality of service flow, a target data packet delay budget of the uplink quality of service flow and a target data packet delay budget of the downlink quality of service flow includes: The access network element selects a target quality of service profile pair from the plurality of quality of service profile pairs. The target quality of service profile pair includes the target data packet delay budget of the uplink quality of service flow and the target data packet delay budget of the downlink quality of service flow. The target data packet delay budget of the uplink quality of service flow is greater than or equal to the current data transmission latency of the uplink quality of service flow. The target data packet delay budget of the downlink quality of service flow is greater than or equal to the current data transmission latency of the downlink quality of service flow.

In the foregoing solution, the access network element does not need to obtain the round-trip latency requirement of the service, and does not need to process, based on the round-trip latency requirement of the service, a quality of service profile delivered by the core network. A processing procedure of the access network element can be further simplified on a basis that the signaling interaction between the access network element and the core network is reduced, so that consumption of the access network element is reduced.

With reference to the first aspect, in some implementations of the first aspect, when the current data transmission latency of the uplink quality of service flow is greater than the data packet delay budget of the uplink quality of service flow, that the access network element determines, from the profile of the uplink quality of service flow and the profile of the downlink quality of service flow, a target data packet delay budget of the uplink quality of service flow and a target data packet delay budget of the downlink quality of service flow includes: The access network element selects, based on the current data transmission latency of the uplink quality of service flow, candidate quality of service profile pairs from the plurality of quality of service profile pairs. Data packet delay budgets that are of the uplink quality of service flow and that are included in the candidate quality of service profile pairs are greater than the current data transmission latency of the uplink quality of service flow. The access network element selects, based on the current data transmission latency of the downlink quality of service flow, the target quality of service profile pair from the candidate quality of service profile pairs.

In the foregoing solution, when the current data transmission latency of the uplink quality of service flow is greater than the data packet delay budget of the uplink quality of service flow, the access network element adjusts the profile of the uplink quality of service flow, so that the target data packet delay budget of the uplink quality of service flow is greater than the current data transmission latency of the uplink quality of service flow, and therefore, quality of service of the uplink quality of service flow can be ensured, and user experience is improved. The access network element can determine the target data packet delay budget of the uplink quality of service flow and the target data packet delay budget of the downlink quality of service flow in a more real-time and more flexible manner, so that the round-trip latency requirement of the service is ensured, and service experience of a user is improved.

With reference to the first aspect, in some implementations of the first aspect, when the current data transmission latency of the downlink quality of service flow is greater than the data packet delay budget of the downlink quality of service flow, that the access network element determines, from the profile of the downlink quality of service flow and the profile of the uplink quality of service flow, a target data packet delay budget of the downlink quality of service flow and a target data packet delay budget of the uplink quality of service flow includes: The access network element selects, based on the current data transmission latency of the downlink quality of service flow, candidate quality of service profile pairs from the plurality of quality of service profile pairs. Data packet delay budgets that are of the downlink quality of service flow and that are included in the candidate quality of service profile pairs are greater than the current data transmission latency of the downlink quality of service flow. The access network element selects, based on the current data transmission latency of the uplink quality of service flow, the target quality of service profile pair from the candidate quality of service profile pairs.

In the foregoing solution, when the current data transmission latency of the downlink quality of service flow is greater than the data packet delay budget of the downlink quality of service flow, the access network element adjusts the profile of the downlink quality of service flow, so that the target data packet delay budget of the downlink quality of service flow is greater than the current data transmission latency of the downlink quality of service flow, and therefore, quality of service of the downlink quality of service flow can be ensured, and user experience is improved. The access network element can determine the target data packet delay budget of the downlink quality of service flow and the target data packet delay budget of the downlink quality of service flow in a more real-time and more flexible manner, so that the round-trip latency requirement of the service is ensured, and service experience of a user is improved.

With reference to the first aspect, in some implementations of the first aspect, the method further includes: The access network element sends, to the session management network element, the target data packet delay budget of the uplink quality of service flow and the target data packet delay budget of the downlink quality of service flow.

In the foregoing solution, a core network control plane can perceive current quality of service of the service, so that all end-to-end devices can correspondingly adjust quality of service profiles, and end-to-end quality of service is ensured.

With reference to the first aspect, in some implementations of the first aspect, the method further includes: The access network element obtains the current data transmission latency of the uplink quality of service flow and the current data transmission latency of the downlink quality of service flow.

In the foregoing solution, the access network can dynamically adjust the profile of the uplink quality of service flow and the profile of the downlink quality of service flow based on the real-time network transmission status, so that the service round-trip latency is quickly and flexibly controlled and guaranteed in a real-time manner.

With reference to the first aspect, in some implementations of the first aspect, that the access network element obtains the current data transmission latency of the uplink quality of service flow and the current data transmission latency of the downlink quality of service flow includes: The access network element measures an air interface latency of the uplink quality of service flow and an air interface latency of the downlink quality of service flow. The access network element determines the current data transmission latency of the uplink quality of service flow based on the air interface latency of the uplink quality of service flow and a core network data packet delay budget of the uplink quality of service flow. The access network element determines the current data transmission latency of the downlink quality of service flow based on the air interface latency of the downlink quality of service flow and a core network data packet delay budget of the downlink quality of service flow.

In comparison with obtaining, from the core network, a current data transmission latency of the core network, in the foregoing solution, the interaction between the access network element and the core network can be further reduced, the overheads are reduced, and the duration of controlling the round-trip latency can be further shortened.

With reference to the first aspect, in some implementations of the first aspect, the access network element measures an air interface latency of the uplink quality of service flow and an air interface latency of the downlink quality of service flow. The access network element receives, from a user plane function network element or the session management network element, a current core network data transmission latency of the uplink quality of service flow and a current core network data transmission latency of the downlink quality of service flow. The access network element determines the current data transmission latency of the uplink quality of service flow based on the air interface latency of the uplink quality of service flow and the current core network data transmission latency of the uplink quality of service flow. The access network element determines the current data transmission latency of the downlink quality of service flow based on the air interface latency of the downlink quality of service flow and the current core network data transmission latency of the downlink quality of service flow.

In the foregoing solution, after obtaining the air interface latency of the uplink quality of service flow and the air interface latency of the downlink quality of service flow, the access network element does not need to report the air interface latency of the uplink quality of service flow and the air interface latency of the downlink quality of service flow to the core network, so that the interaction between the access network element and the core network can be further reduced, the overheads are reduced, and the duration of controlling the round-trip latency can be further shortened.

With reference to the first aspect, in some implementations of the first aspect, the method further includes: The access network element receives latency control indication information from the session management network element. The latency control indication information triggers the access network element to determine, from the profile of the uplink quality of service flow and the profile of the downlink quality of service flow, the target data packet delay budget of the uplink quality of service flow and the target data packet delay budget of the downlink quality of service flow. That the access network element determines, from the profile of the uplink quality of service flow and the profile of the downlink quality of service flow, a target data packet delay budget of the uplink quality of service flow and a target data packet delay budget of the downlink quality of service flow includes: The access network element determines, from the profile of the uplink quality of service flow and the profile of the downlink quality of service flow, the target data packet delay budget of the uplink quality of service flow and the target data packet delay budget of the downlink quality of service flow based on the latency control indication information.

In the foregoing solution, the access network element can determine the target data packet delay budget of the uplink quality of service flow and the target data packet delay budget of the downlink quality of service flow based on an indication of a core network element, so that the core network schedules internal processing of the access network element in the procedure.

With reference to the first aspect, in some implementations of the first aspect, the method further includes: The access network element receives association indication information from the session management network element. The association indication information indicates that the uplink quality of service flow is associated with the downlink quality of service flow. The access network element determines, based on the association indication information, to perform coordinated adjustment on a quality of service profile of the uplink quality of service flow and a quality of service profile of the downlink quality of service flow, where the uplink quality of service flow and the downlink quality of service flow are respectively for transmitting the uplink data and the downlink data of the service.

In the foregoing solution, the access network element can perform coordinated adjustment on the quality of service profile of the uplink quality of service flow and the quality of service profile of the downlink quality of service flow, so that quality of service of the two quality of service flows can be both ensured, and user experience is further ensured.

With reference to the first aspect, in some implementations of the first aspect, a sum of a largest value of the data packet delay budgets in the profile of the uplink quality of service flow and a smallest value of the data packet delay budgets in the profile of the downlink quality of service flow is less than or equal to the round-trip latency requirement. A sum of a smallest value of the data packet delay budgets in the profile of the uplink quality of service flow and a largest value of the data packet delay budgets in the profile of the downlink quality of service flow is less than or equal to the round-trip latency requirement.

In the foregoing solution, the profile of the uplink quality of service flow and the profile of the downlink quality of service flow that are configured by the core network already satisfy the requirement in the foregoing solution. This is equivalent to that the core network has preliminarily screened the data packet delay budgets in the quality of service profiles, so that an extreme case is avoided. Therefore, a selection range of the profile of the uplink quality of service flow and the profile of the downlink quality of service flow that are sent to the access network element is narrowed, signaling overheads are reduced, and complexity of the access network element is also reduced.

According to a second aspect, a latency control method is provided. The method may be performed by a policy control network element, or may be performed by a component (for example, a chip or a circuit) of the policy control network element. This is not limited in this application. For ease of description, an example in which the method is performed by a policy control network element is used for description below. For beneficial effects of the second aspect, refer to beneficial effects of the first aspect.

The method may include: A policy control network element receives a round-trip latency requirement of a service. The policy control network element generates a parameter of an uplink quality of service flow and a parameter of a downlink quality of service flow based on the round-trip latency requirement. The uplink quality of service flow and the downlink quality of service flow are respectively for transmitting uplink data and downlink data of the service. The policy control network element sends the parameter of the uplink quality of service flow and the parameter of the downlink quality of service flow to a session management network element.

In the foregoing solution, an access network element can perform coordinated adjustment on the quality of service parameter of the uplink quality of service flow and the quality of service parameter of the downlink quality of service flow, so that quality of service of the two quality of service flows can be both ensured, and user experience is further ensured.

With reference to the second aspect, in some implementations of the second aspect, the method further includes: The policy control network element determines, based on the round-trip latency requirement, to create the uplink quality of service flow and the downlink quality of service flow for the service.

In the foregoing solution, it is determined that the uplink quality of service flow and the downlink quality of service flow carry data flows of the same service, so that the access network element can perform coordinated adjustment on the quality of service parameter of the uplink quality of service flow and the quality of service parameter of the downlink quality of service flow. Therefore, the quality of service of the two quality of service flows can be both ensured, and user experience is further ensured.

With reference to the second aspect, in some implementations of the second aspect, the method further includes: The policy control network element sends the round-trip latency requirement to the session management network element.

With reference to the second aspect, in some implementations of the second aspect, the parameter of the uplink quality of service flow includes a plurality of groups of uplink quality of service parameters, and the parameter of the downlink quality of service flow includes a plurality of groups of downlink quality of service parameters. Each group of uplink quality of service parameters includes a data packet delay budget of the uplink quality of service flow, and each group of downlink quality of service parameters includes a data packet delay budget of the downlink quality of service flow.

With reference to the second aspect, in some implementations of the second aspect, the parameter of the uplink quality of service flow and the parameter of the downlink quality of service flow include a plurality of quality of service parameter pairs. Each quality of service parameter pair includes an uplink quality of service parameter and a downlink quality of service parameter. A sum of a data packet delay budget in the uplink quality of service parameter included in each quality of service parameter pair and a data packet delay budget in the downlink quality of service parameter included in each quality of service parameter pair satisfies the round-trip latency requirement.

With reference to the second aspect, in some implementations of the second aspect, the parameter of the uplink quality of service flow includes at least two uplink budget values of a data packet delay budget of the uplink quality of service flow, and the parameter of the downlink quality of service flow includes at least two downlink budget values of a data packet delay budget of the downlink quality of service flow.

With reference to the second aspect, in some implementations of the second aspect, a sum of a largest value of the data packet delay budgets in the parameter of the uplink quality of service flow and a smallest value of the data packet delay budgets in the parameter of the downlink quality of service flow is less than or equal to the round-trip latency requirement. A sum of a smallest value of the data packet delay budgets in the parameter of the uplink quality of service flow and a largest value of the data packet delay budgets in the parameter of the downlink quality of service flow is less than or equal to the round-trip latency requirement.

According to a third aspect, a latency control method is provided. The method may be performed by a session management network element, or may be performed by a component (for example, a chip or a circuit) of the session management network element. This is not limited in this application. For ease of description, an example in which the method is performed by a session management network element is used for description below. For beneficial effects of the third aspect, refer to beneficial effects of the first aspect.

The method may include: A session management network element receives, from a policy control network element, a parameter of an uplink quality of service flow and a parameter of a downlink quality of service flow. The uplink quality of service flow and the downlink quality of service flow are respectively for transmitting uplink data and downlink data of a service. The parameter of the uplink quality of service flow and the parameter of the downlink quality of service flow satisfy a round-trip latency requirement of the service. The session management network element sends, to an access network element, a profile of the uplink quality of service flow and a profile of the downlink quality of service flow based on the parameter of the uplink quality of service flow and the parameter of the downlink quality of service flow.

With reference to the third aspect, in some implementations of the third aspect, the method further includes: The session management network element generates the profile of the uplink quality of service flow and the profile of the downlink quality of service flow based on the parameter of the uplink quality of service flow and the parameter of the downlink quality of service flow.

With reference to the third aspect, in some implementations of the third aspect, the profile of the uplink quality of service flow includes a plurality of groups of uplink quality of service profiles, and the profile of the downlink quality of service flow includes a plurality of groups of downlink quality of service parameters. Each group of uplink quality of service profiles includes a data packet delay budget, and each group of the downlink quality of service profiles includes a data packet delay budget.

With reference to the third aspect, in some implementations of the third aspect, the profile of the uplink quality of service flow includes at least two uplink budget values of a data packet delay budget of the uplink quality of service flow, and the profile of the downlink quality of service flow includes at least two downlink budget values of a data packet delay budget of the uplink quality of service flow.

With reference to the third aspect, in some implementations of the third aspect, the method further includes: The session management network element sends the round-trip latency requirement to the access network element.

With reference to the third aspect, in some implementations of the third aspect, the parameter of the uplink quality of service flow and the parameter of the downlink quality of service flow include a plurality of quality of service parameter pairs. Each quality of service parameter pair includes an uplink quality of service parameter and a downlink quality of service parameter. A sum of a data packet delay budget in the uplink quality of service parameter included in each quality of service parameter pair and a data packet delay budget in the downlink quality of service parameter included in each quality of service parameter pair satisfies the round-trip latency requirement. The profile of the uplink quality of service flow and the profile of the downlink quality of service flow include a plurality of quality of service profile pairs. Each quality of service profile pair includes an uplink quality of service profile and a downlink quality of service profile. A sum of a data packet delay budget in the uplink quality of service profile included in each quality of service profile pair and a data packet delay budget in the downlink quality of service profile included in each quality of service profile pair satisfies the round-trip latency requirement.

With reference to the third aspect, in some implementations of the third aspect, the method further includes: The session management network element sends latency control indication information to the access network element. The latency control indication information triggers the access network element to determine, from the profile of the uplink quality of service flow and the profile of the downlink quality of service flow, a target data packet delay budget of the uplink quality of service flow and a target data packet delay budget of the downlink quality of service flow.

With reference to the third aspect, in some implementations of the third aspect, the method further includes: The session management network element sends association indication information to the access network element. The association indication information indicates that the uplink quality of service flow is associated with the downlink quality of service flow.

With reference to the third aspect, in some implementations of the third aspect, a sum of a largest value of the data packet delay budgets in the parameter of the uplink quality of service flow and a smallest value of the data packet delay budgets in the parameter of the downlink quality of service flow is less than or equal to the round-trip latency requirement. A sum of a smallest value of the data packet delay budgets in the parameter of the uplink quality of service flow and a largest value of the data packet delay budgets in the parameter of the downlink quality of service flow is less than or equal to the round-trip latency requirement. A sum of a largest value of the data packet delay budgets in the profile of the uplink quality of service flow and a smallest value of the data packet delay budgets in the profile of the downlink quality of service flow is less than or equal to the round-trip latency requirement. A sum of a smallest value of the data packet delay budgets in the profile of the uplink quality of service flow and a largest value of the data packet delay budgets in the profile of the downlink quality of service flow is less than or equal to the round-trip latency requirement.

According to a fourth aspect, a latency control method is provided. The method may be performed by an access network element, or may be performed by a component (for example, a chip or a circuit) of the access network element. This is not limited in this application. For ease of description, an example in which the method is performed by an access network element is used for description below.

The method may include: An access network element receives, from a session management network element, a profile of a first quality of service flow and a profile of a second quality of service flow. The first quality of service flow is associated with the second quality of service flow. When a current data transmission latency of the first quality of service flow and a current data transmission latency of the second quality of service flow do not satisfy an association latency requirement of a service, the access network element determines, from the profile of the first quality of service flow and the profile of the second quality of service flow, a target data packet delay budget of the first quality of service flow and a target data packet delay budget of the second quality of service flow. The target data packet delay budget of the first quality of service flow and the target data packet delay budget of the second quality of service flow satisfy the association latency requirement.

The first quality of service flow may be an uplink quality of service flow or a downlink quality of service flow, and the second quality of service flow may be an downlink quality of service flow or a uplink quality of service flow.

That a current data transmission latency of the first quality of service flow and a current data transmission latency of the second quality of service flow do not satisfy an association latency requirement of a service may be understood as that a sum of the current data transmission latency of the first quality of service flow and the current data transmission latency of the second quality of service flow does not satisfy the association latency requirement of the service. That the target data packet delay budget of the first quality of service flow and the target data packet delay budget of the second quality of service flow satisfy the association latency requirement may be understood as that a sum of the target data packet delay budget of the first quality of service flow and the target data packet delay budget of the second quality of service flow satisfies the association latency requirement.

Alternatively, that a current data transmission latency of the first quality of service flow and a current data transmission latency of the second quality of service flow do not satisfy an association latency requirement of a service may be understood as that a difference between the current data transmission latency of the first quality of service flow and the current data transmission latency of the second quality of service flow does not satisfy the association latency requirement of the service. That the target data packet delay budget of the first quality of service flow and the target data packet delay budget of the second quality of service flow satisfy the association latency requirement may be understood as that a difference between the target data packet delay budget of the first quality of service flow and the target data packet delay budget of the second quality of service flow satisfies the association latency requirement.

Optionally, that the first quality of service flow is associated with the second quality of service flow may be understood as that the first quality of service flow and the second quality of service flow are respectively for transmitting data of the same service.

Optionally, that the first quality of service flow is associated with the second quality of service flow may be understood as that the first quality of service flow and the second quality of service flow are respectively for transmitting uplink data and downlink data.

According to a fifth aspect, a communication method is provided. The method includes: A session management network element sends, to an access network element, a profile of an uplink quality of service flow and a profile of a downlink quality of service flow based on a parameter of the uplink quality of service flow and a parameter of the downlink quality of service flow. The access network element receives, from the session management network element, the profile of the uplink quality of service flow and the profile of the downlink quality of service flow. The uplink quality of service flow and the downlink quality of service flow are respectively for transmitting uplink data and downlink data of a service. When a sum of a current data transmission latency of the uplink quality of service flow and a current data transmission latency of the downlink quality of service flow does not satisfy a round-trip latency requirement of the service, the access network element determines, from the profile of the uplink quality of service flow and the profile of the downlink quality of service flow, a target data packet delay budget of the uplink quality of service flow and a target data packet delay budget of the downlink quality of service flow. The target data packet delay budget of the uplink quality of service flow and the target data packet delay budget of the downlink quality of service flow satisfy the round-trip latency requirement.

According to a sixth aspect, a communication method is provided. The method includes: A policy control network element receives a round-trip latency requirement of a service. The policy control network element generates a parameter of an uplink quality of service flow and a parameter of a downlink quality of service flow based on the round-trip latency requirement of the service. The uplink quality of service flow and the downlink quality of service flow are respectively for transmitting uplink data and downlink data of the service. The policy control network element sends the parameter of the uplink quality of service flow and the parameter of the downlink quality of service flow to a session management network element. The session management network element receives, from the policy control network element, the parameter of the uplink quality of service flow and the parameter of the downlink quality of service flow.

According to a seventh aspect, a communication method is provided. The method includes: A policy control network element receives a round-trip latency requirement of a service. The policy control network element generates a parameter of an uplink quality of service flow and a parameter of a downlink quality of service flow based on the round-trip latency requirement of the service. The uplink quality of service flow and the downlink quality of service flow are respectively for transmitting uplink data and downlink data of the service. The policy control network element sends the parameter of the uplink quality of service flow and the parameter of the downlink quality of service flow to a session management network element. The session management network element receives, from the policy control network element, the parameter of the uplink quality of service flow and the parameter of the downlink quality of service flow. The session management network element sends, to an access network element, a profile of the uplink quality of service flow and a profile of the downlink quality of service flow based on the parameter of the uplink quality of service flow and the parameter of the downlink quality of service flow. The access network element receives, from the session management network element, the profile of the uplink quality of service flow and the profile of the downlink quality of service flow. The uplink quality of service flow and the downlink quality of service flow are respectively for transmitting the uplink data and the downlink data of the service. When a sum of a current data transmission latency of the uplink quality of service flow and a current data transmission latency of the downlink quality of service flow does not satisfy the round-trip latency requirement of the service, the access network element determines, from the profile of the uplink quality of service flow and the profile of the downlink quality of service flow, a target data packet delay budget of the uplink quality of service flow and a target data packet delay budget of the downlink quality of service flow. The target data packet delay budget of the uplink quality of service flow and the target data packet delay budget of the downlink quality of service flow satisfy the round-trip latency requirement.

According to an eighth aspect, a communication apparatus is provided. The apparatus includes at least one processor, configured to execute a computer program or instructions stored in a memory, to perform the method in any possible implementation of the first aspect to the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, an access network element, a policy control network element, or a session management network element).

In another implementation, the apparatus is a chip, a chip system, or a circuit used in the communication device (for example, the access network element, the policy control network element, or the session management network element).

According to a ninth aspect, this application provides a processor, configured to perform the methods provided in the first aspect to the third aspect.

Unless operations such as sending and obtaining/receiving related to the processor is otherwise specified, or if the operations do not conflict with actual functions or internal logic of the operations in related descriptions, the operations may be understood as operations such as outputting, receiving, and inputting of the processor, or may be understood as sending and receiving operations performed by a radio frequency circuit and an antenna. This is not limited in this application.

According to a tenth aspect, a latency control system is provided, including an access network element, a policy control function network element, and a session management network element. The access network element is configured to perform the method in any possible implementation of the first aspect, the policy control function network element is configured to perform the method in any possible implementation of the second aspect, and the session management network element is configured to perform the method in any possible implementation of the third aspect.

According to an eleventh aspect, a computer-readable storage medium is provided. The computer-readable storage medium stores program code to be executed by a device, and the program code includes the method in any possible implementation of the first aspect to the third aspect.

According to a twelfth aspect, a computer program product including instructions is provided. When the computer program product runs on a computer, the computer is enabled to perform the method in any possible implementation of the first aspect to the third aspect.

### BRIEF DESCRIPTION OF DRAWINGS

FIG. 1 shows an architecture of a fifth generation communication system;
FIG. 2 is a schematic diagram of a latency control method 100 according to this application;
FIG. 3 is a schematic diagram of a latency control method 200 according to this application;
FIG. 4 is a schematic diagram of a latency control method 300 according to this application;
FIG. 5 is a schematic diagram of a latency control method 400 according to this application;
FIG. 6A and FIG. 6B are a schematic diagram of a latency control method 500 according to this application;
FIG. 7A and FIG. 7B are a schematic diagram of a latency control method 600 according to this application;
FIG. 8A and FIG. 8B are a schematic diagram of a latency control method 700 according to this application;
FIG. 9 is a schematic diagram of a latency control apparatus 800 to which this application is applicable;
FIG. 10 is a schematic diagram of another latency control apparatus 900 to which this application is applicable; and
FIG. 11 is a schematic diagram of a chip system 1000 to which this application is applicable.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, or an LTE time division duplex (time division duplex, TDD) system. The technical solutions provided in this application may also be applied to a future communication system, for example, a 6th generation (6th generation, 6G) mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

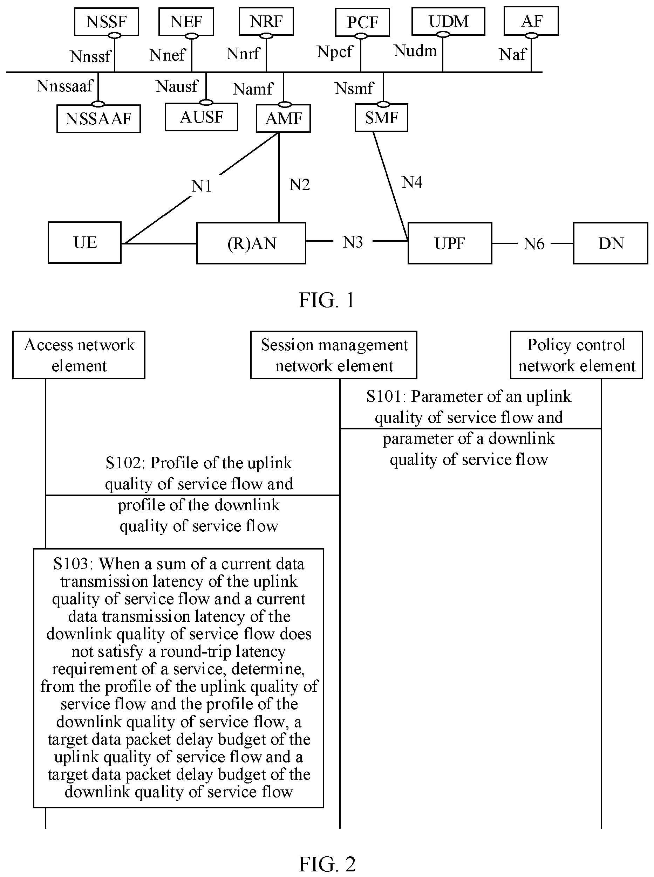

FIG. 1 shows an architecture of a 5G communication system. As shown in FIG. 1, the architecture of the 5G system is divided into two parts: an access network and a core network. The access network is configured to implement a function related to wireless access. The core network mainly includes the following key logical network elements: a radio access network (radio access network, RAN), an access and mobility management network element (access and mobility management function, AMF), a session management network element (session management function, SMF), a user plane network element (user plane function, UPF), a policy control network element (policy control function), a unified data management network element (unified data management, UDM), and a network slice authentication and authorization network element (network slice specific authentication and authorization function, NSSAAF).

A terminal (user equipment, UE) is a network terminal device, such as a mobile phone or an internet of things terminal device.

The RAN is a device providing wireless access for a terminal device, and includes but is not limited to an evolved NodeB (evolved NodeB, eNodeB), a Wi-Fi access point, a world interoperability for microwave access base station, and the like.

The AMF is mainly responsible for mobility management in a mobile network, such as user location update, registration of a user with a network, and user switching.

The SMF is mainly responsible for session management in the mobile network, such as session establishment, modification, and release. A specific function is, for example, allocating an internet protocol (internet protocol, IP) address to a user, or selecting a UPF that provides a packet forwarding function.

The PCF is responsible for providing policies, such as a quality of service policy and a slice selection policy, for the AMF and the SMF.

The UDM is configured to store user data such as subscription information and authentication/authorization information.

The NSSAAF is mainly responsible for authentication and authorization of a network slice, and may interact with an authentication, authorization, and accounting server (authentication, authorization, and accounting Server, AAA-S) by using an authentication, authorization, and accounting proxy (authentication, authorization, and accounting proxy, AAA-P).

An application function (application function, AF) is responsible for providing a service to a 3GPP network, for example, affecting service routing and interacting with the PCF to perform policy control.

The UPF is mainly responsible for processing a user packet, such as forwarding and charging.

A DN is an operator network that provides a data transmission service for a user, for example, an internet protocol multimedia service (internet protocol Multi-media Service, IMS) or an internet (Internet).

The UE accesses the data network (data network, DN) by establishing a protocol data unit session (protocol data unit) session, PDU) between the UE and the RAN, between the RAN and the UPF, and between the UPF and the DN.

To better understand embodiments of this application, the following describes some technical terms in this application.
1. Quality of service (quality of service, QoS) flow (flow): In a 5G system, when UE has a service communication requirement, a PDU session is established. In the PDU session, a QoS flow carries a corresponding service flow. Specifically, the UE obtains an IP address by establishing the PDU session, to interact with an external service server, so as to implement service communication. The 5G system maps the corresponding service flow to different QoS flows based on service flow description information, for example, a service data flow (service data flow, SDF) template (template), to perform corresponding QoS processing.
2. QoS parameter (parameter): The QoS parameter is generated by a PCF and then sent to an SMF. The QoS parameter may enable a plurality of services of a same type to have a same minimum QoS guarantee. For example, the QoS parameter includes a guaranteed flow bit rate, a maximum flow bit rate, or a 5G quality of service identifier (5G QoS identifier, 5QI).
3. QoS profile (Profile): The QoS Profile is sent from an SMF to a RAN side. The QoS Profile includes a QoS parameter such as a 5G quality of service identifier (5G QoS identifier, 5QI) or a guaranteed/maximum service flow rate. For example, the SMF generates the QoS profile based on the QoS parameter.

Currently, more services impose an extremely high requirement on a round-trip latency in data transmission. The round-trip latency is a sum of an uplink transmission latency and a downlink transmission latency. Once the round-trip latency in the data transmission cannot satisfy a service requirement, service running may be greatly affected, and consequently, user experience is affected. For example, a real-time media service has a high requirement on the round-trip latency. The real-time media service includes virtual reality, augmented reality, extended reality (extended reality, XR), or the like. Using an XR service as an example, a round-trip latency required by the XR service may be understood as a latency from detecting a head/hand motion to rendering a corresponding new picture by an image engine and displaying the picture on a screen. If the latency is excessively high, a user may consequently feel dizzy, and experience of the XR service is affected. Therefore, how to control the round-trip latency based on the service requirement is an urgent problem to be resolved.

In view of this, this application provides a latency control method. For example, an access network element determines (for example, calculates) a data packet delay budget of an uplink quality of service flow and a data packet delay budget of a downlink quality of service flow based on a current transmission latency status of uplink data and downlink data and a round-trip latency requirement of a service, and sends the determined data packet delay budget of the uplink quality of service flow and the determined data packet delay budget of the downlink quality of service flow to a session management network element via an access and mobility management network element. The session management network element then sends the determined data packet delay budget of the uplink quality of service flow and the determined data packet delay budget of the downlink quality of service flow to a policy control network element. Finally, the policy control network element determines whether to adjust uplink and downlink data packet delay budgets of the service. The policy control network element sends a determining result to the access network element. The access network element determines, based on the determining result, whether to adjust the uplink and downlink data packet delay budgets based on the data packet delay budget of the uplink quality of service flow and the data packet delay budget of the downlink quality of service flow. For another example, this application provides a latency control method 100 to a latency control method 700.

A 5G system is used as an example. In the latency control methods provided in this application, a policy control network element may be the PCF in FIG. 1, an access network element may be the (R)AN in FIG. 1, and a session management network element may be the SMF in FIG. 1.

FIG. 2 is a schematic diagram of a latency control method 100 according to this application. With reference to FIG. 2, the following describes in detail the latency control method 100 provided in this application.

S101: A policy control network element sends a parameter of an uplink quality of service flow and a parameter of a downlink quality of service flow to a session management network element, and correspondingly, the session management network element receives, from the policy control network element, the parameter of the uplink quality of service flow and the parameter of the downlink quality of service flow.

The uplink quality of service flow and the downlink quality of service flow are respectively for transmitting uplink data and downlink data of a service. The parameter of the uplink quality of service flow and the parameter of the downlink quality of service flow satisfy a round-trip latency requirement of the service.

Optionally, the parameter of the uplink quality of service flow and the parameter of the downlink quality of service flow that are sent by the policy control network element to the session management network are carried by a policy and charging control (policy and charging control, PCC) rule. The PCC rule is sent by the policy control network element to the session management network element.

Optionally, the policy control network element determines, based on the round-trip latency requirement of the service, that a data stream of the service needs to be mapped to two quality of service flows for transmission. To be specific, the uplink quality of service flow and the downlink quality of service flow are respectively for transmitting the uplink data and the downlink data of the service. For example, the policy control network element sends association indication information #1 to the session management network element, and correspondingly, the session management network element receives the association indication information #1 from the policy control network element. The association indication information #1 indicates that the uplink quality of service flow is associated with the downlink quality of service flow, or indicates that the uplink quality of service flow and the downlink quality of service flow carry data of the same service. The association indication information #1 may be independent information, or may be sent together with the parameter of the uplink quality of service flow and the parameter of the downlink quality of service flow, or may be carried in the policy and charging control PCC rule.

It should be noted that, in this application, the uplink quality of service flow carries all or a part of the uplink data of the service, and the downlink quality of service flow carries all or a part of the downlink data of the service. This is not limited herein.

Example 1-1: The parameter of the uplink quality of service flow and the parameter of the downlink quality of service flow are generated by the policy control network element based on the round-trip latency requirement and/or other information (for example, subscription information of a user, a service level agreement (service level agreement, SLA) requirement of an application, or a current network status). In other words, the parameter of the uplink quality of service flow and the parameter of the downlink quality of service flow satisfy the round-trip latency requirement. Optionally, that the parameter of the uplink quality of service flow and the parameter of the downlink quality of service flow satisfy the round-trip latency requirement may be understood as that neither a data packet delay budget in the parameter of the uplink quality of service flow nor a data packet delay budget in the parameter of the downlink quality of service flow exceeds the round-trip latency requirement. Alternatively, a sum of a largest value of data packet delay budgets in the parameter of the uplink quality of service flow and a smallest value of data packet delay budgets in the parameter of the downlink quality of service flow satisfies the round-trip latency requirement, and a sum of a smallest value of the data packet delay budgets in the parameter of the uplink quality of service flow and a largest value of the data packet delay budgets in the parameter of the downlink quality of service flow satisfies the round-trip latency requirement.

The round-trip latency requirement of the service may be understood as a threshold. In this application, that the round-trip latency requirement is satisfied may be understood as being less than or equal to the threshold, and that the round-trip latency requirement is not satisfied may be understood as being greater than the threshold. Unified descriptions are provided herein, and details are not described again below.

The following uniformly describes a data packet delay budget included in a parameter of a quality of service flow in this application. Details are not described again below. The data packet delay budget included in the parameter of the quality of service flow in this application may be an explicit data packet delay budget, for example, a value of the data packet delay budget, or may be other information that can indicate the data packet delay budget, or information that can be used to determine the data packet delay budget, for example, a 5QI. This is not limited in this application.

Example 1-2: The round-trip latency requirement of the service may be preconfigured in the policy control network element, or may be received by the policy control network element from another network element (for example, an application entity). This is not limited in this application.

S102: The session management network element sends, to an access network element, a profile of the uplink quality of service flow and a profile of the downlink quality of service flow based on the parameter of the uplink quality of service flow and the parameter of the downlink quality of service flow, and correspondingly, the access network element receives, from the session management network element, the profile of the uplink quality of service flow and the profile of the downlink quality of service flow.

Optionally, the method 100 further includes: The session management network element creates the uplink quality of service flow and the downlink quality of service flow for the service based on the parameter of the uplink quality of service flow and the parameter of the downlink quality of service flow. The uplink quality of service flow and the downlink quality of service flow are respectively for carrying the uplink data and the downlink data of the service.

Example 2-1: The method 100 may further include: The session management network element generates the profile of the uplink quality of service flow and the profile of the downlink quality of service flow based on the parameter of the uplink quality of service flow and the parameter of the downlink quality of service flow. Optionally, the sum of the largest value of the data packet delay budgets in the profile of the uplink quality of service flow and the smallest value of the data packet delay budgets in the profile of the downlink quality of service flow is less than or equal to the round-trip latency requirement, and the sum of the smallest value of the data packet delay budgets in the profile of the uplink quality of service flow and the largest value of the data packet delay budgets in the profile of the downlink quality of service flow is less than or equal to the round-trip latency requirement. Alternatively, both a data packet delay budget in the parameter of the uplink quality of service flow and a data packet delay budget in the parameter of the downlink quality of service flow is less than or equal to the round-trip latency requirement.

The following uniformly describes a data packet delay budget included in a profile of a quality of service flow in this application. Details are not described again below. The data packet delay budget included in the profile of the quality of service flow in this application may be an explicit data packet delay budget, for example, a value of the data packet delay budget, or may be other information that can indicate the data packet delay budget, or information that can be used to determine the data packet delay budget, for example, a 5QI. This is not limited in this application.

Example 2-2: The method 100 may further include step 1-1: The session management network element sends association indication information #2 to the access network element, and correspondingly, the access network element receives the association indication information #2 from the session management network element. The association indication information #2 may indicate that the uplink quality of service flow is associated with the downlink quality of service flow. Step 1-2: The access network element performs coordinated adjustment on quality of service profiles of the uplink quality of service flow and the downlink quality of service flow based on the association indication information #2. The uplink quality of service flow and the downlink quality of service flow are respectively for transmitting the uplink data and the downlink data of the service.

S103: When a sum of a current data transmission latency of the uplink quality of service flow and a current data transmission latency of the downlink quality of service flow does not satisfy the round-trip latency requirement of the service, the access network element determines, from the profile of the uplink quality of service flow and the profile of the downlink quality of service flow, a target data packet delay budget of the uplink quality of service flow and a target data packet delay budget of the downlink quality of service flow.

The target data packet delay budget of the uplink quality of service flow and the target data packet delay budget of the downlink quality of service flow satisfy the round-trip latency requirement.

Optionally, before S103, the access network element determines whether the current data transmission latency of the uplink quality of service flow and the current data transmission latency of the downlink quality of service flow satisfy the round-trip latency requirement of the service.

Example 3-1: The method 100 may further include: Before S103, the access network element obtains the current data transmission latency of the uplink quality of service flow and the current data transmission latency of the downlink quality of service flow. A manner in which the access network element obtains the current data transmission latency of the uplink quality of service flow and the current data transmission latency of the downlink quality of service flow includes but is not limited to the following two manners.

### Manner 1:

Step 2-1: The access network element measures an air interface latency (for example, an uplink data transmission latency of a Uu interface) of the uplink quality of service flow and an air interface latency (for example, a downlink data transmission latency of the Uu interface) of the downlink quality of service flow.

Step 2-2: The access network element receives, from a user plane function network element or the session management network element, a current core network data transmission latency (for example, an uplink data transmission delay on an N3 link) of the uplink quality of service flow and a current core network data transmission latency (for example, a downlink data transmission delay on the N3 link) of the downlink quality of service flow.

Step 2-3: The access network element determines the current data transmission latency of the uplink quality of service flow based on the air interface latency of the uplink quality of service flow and the current core network data transmission latency of the uplink quality of service flow.

Step 2-4: The access network element determines the current data transmission latency of the downlink quality of service flow based on the air interface latency of the downlink quality of service flow and the current core network data transmission latency of the downlink quality of service flow.

### Manner 2:

Step 3-1: The access network element measures an air interface latency of the uplink quality of service flow and an air interface latency of the downlink quality of service flow.

Step 3-2: The access network element determines the current data transmission latency of the uplink quality of service flow based on the air interface latency of the uplink quality of service flow and a core network packet delay budget (core network packet delay budget, CN PDB) of the uplink quality of service flow.

Step 3-3: The access network element determines the current data transmission latency of the downlink quality of service flow based on the air interface latency of the downlink quality of service flow and a core network data packet delay budget of the downlink quality of service flow.

It may be understood that the core network packet delay budget may be usually considered as a fixed value. An access network device may determine a corresponding core network data packet delay budget (namely, a CN PDB) based on a current quality of service profile from the session management network element. Therefore, the access network device determines the data packet transmission latency of the uplink quality of service flow or the downlink quality of service flow based on the measured air interface latency and the corresponding core network data packet delay budget.

It may be further understood that, in Manner 2, interaction between the access network element and a core network can be further reduced, overheads are reduced, and duration of controlling a round-trip latency can be further shortened.

Example 3-2: Before S103, the method 100 may further include: The session management network element sends latency control indication information to the access network element, and correspondingly, the access network element receives the latency control indication information from the session management network element.

The latency control indication information triggers the access network element to determine, from the profile of the uplink quality of service flow and the profile of the downlink quality of service flow, the target data packet delay budget of the uplink quality of service flow and the target data packet delay budget of the downlink quality of service flow. The uplink quality of service flow is associated with the downlink quality of service flow. Optionally, the uplink quality of service flow and the downlink quality of service flow herein are the uplink quality of service flow and the downlink quality of service flow that are indicated by the association indication information #2 in this application.

For example, the latency control indication information may include an identifier of the uplink quality of service flow and an identifier of the downlink quality of service flow, or may include an association identifier of the uplink quality of service flow and the downlink quality of service flow.

For example, the latency control indication information may be an independent information element, or may be carried in a same message with the profile of the uplink quality of service flow or the profile of the downlink quality of service flow.

Therefore, in S103, the access network element determines, from the profile of the uplink quality of service flow and the profile of the downlink quality of service flow that are associated, the target data packet delay budget of the uplink quality of service flow and the target data packet delay budget of the downlink quality of service flow based on the latency control indication information.

Example 3-3: When Example 3-2 is not performed, the association indication information #2 in Example 2-2 may further have a function of the latency control indication information.

In the foregoing solution, the access network element determines, based on the current data transmission latency of the uplink quality of service flow and the current data transmission latency of the downlink quality of service flow, the target data packet delay budget of the uplink quality of service flow and the target data packet delay budget of the downlink quality of service flow from the profile of the uplink quality of service flow and the profile of the downlink quality of service flow that are received from a core network side. In this way, the round-trip latency is efficiently controlled based on a service requirement in a timely manner. In addition, in the foregoing solution, the access network element updates a data packet delay budget of the uplink quality of service flow and a data packet delay budget of the downlink quality of service flow. In comparison with that a policy control network element updates the data packet delay budget of the uplink quality of service flow and the data packet delay budget of the downlink quality of service flow, signaling interaction between the access network element and a core network can be reduced, overheads are reduced, and duration of controlling the round-trip latency can be shortened.

In addition, after the access network element determines the target data packet delay budget of the uplink quality of service flow and the target data packet delay budget of the downlink quality of service flow, a case in which an updated quality of service profile is not authorized by the core network does not occur. Therefore, the updated quality of service profile may not be sent to the core network, so that the signaling interaction is further reduced, and the overheads are reduced.

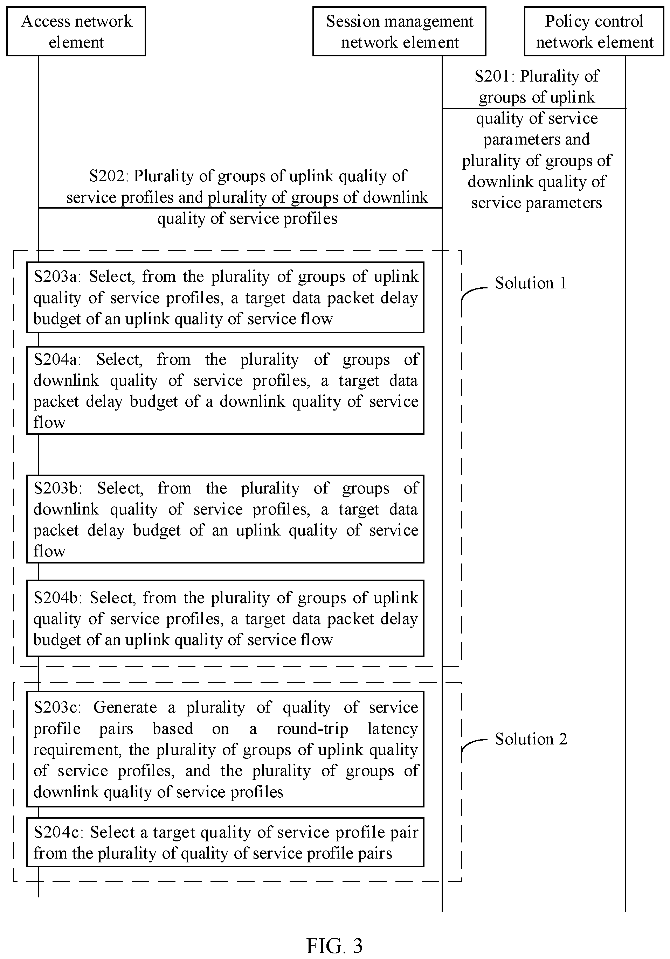

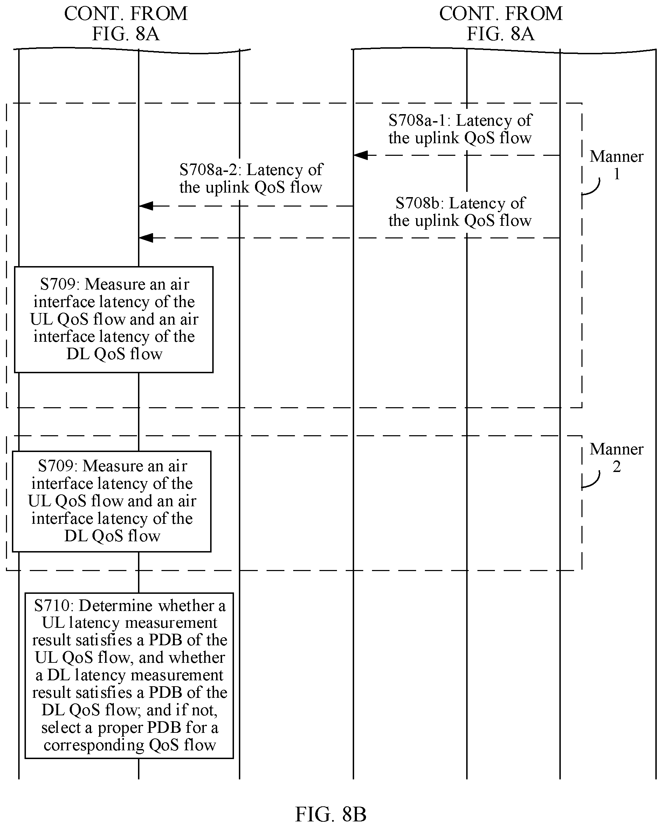

The following describes several possible implementations of the method 100 with reference to FIG. 3 to FIG. 8A and FIG. 8B.

FIG. 3 is a schematic diagram of a latency control method 200 according to this application. With reference to FIG. 3, the following describes in detail the latency control method 200 provided in this application. In the method 200, the profile of the uplink quality of service flow in the method 100 is described by using a plurality of groups of uplink quality of service profiles as an example, and the profile of the downlink quality of service flow is described by using a plurality of groups of downlink quality of service profiles as an example. The parameter of the uplink quality of service flow in the method 100 is described by using a plurality of groups of uplink quality of service parameters as an example, and the parameter of the downlink quality of service flow is described by using a plurality of groups of downlink quality of service parameters as an example.

S201 is a possible example of S101. For example, the parameter of the uplink quality of service flow includes a plurality of groups of uplink quality of service parameters, and the parameter of the downlink quality of service flow includes a plurality of groups of downlink quality of service parameters.

S201: The policy control network element sends a plurality of groups of uplink quality of service parameters and a plurality of groups of downlink quality of service parameters to the session management network element, and correspondingly, the session management network element receives, from the policy control network element, the plurality of groups of uplink quality of service parameters and the plurality of groups of downlink quality of service parameters.

Each group of uplink quality of service parameters includes a data packet delay budget of the uplink quality of service flow, and each group of downlink quality of service parameters includes a data packet delay budget of the downlink quality of service flow.

For example, the plurality of groups of uplink quality of service parameters may be shown in Table 1. Four groups of uplink quality of service parameters are used as an example, and include a QoS parameter (Parameter) #A to a QoS Parameter #D. The plurality of groups of downlink quality of service parameters may be shown in Table 2. Four groups of downlink quality of service parameters are used as an example, and include a QoS Parameter #1 to a QoS Parameter #4. Optionally, a sum of a largest value of data packet delay budgets included in the QoS parameter (Parameter) #A to the QoS Parameter #D and a smallest value of data packet delay budgets included in the QoS Parameter #1 to the QoS Parameter #4 satisfies the round-trip latency requirement. A sum of a smallest value of the data packet delay budgets included in the QoS parameter (Parameter) #A to the QoS Parameter #D and a largest value of the data packet delay budgets included in the QoS Parameter #1 to the QoS Parameter #4 satisfies the round-trip latency requirement.

**Table 1**

| Uplink quality of service parameter |
|---|
| QoS Parameter #A |
| QoS Parameter #B |
| QoS Parameter #C |
| QoS Parameter #D |

**Table 2**

| Downlink quality of service parameter |
|---|
| QoS Parameter #1 |
| QoS Parameter #2 |
| QoS Parameter #3 |
| QoS Parameter #4 |

It should be noted that Table 1 and Table 2 are merely examples, and do not limit group quantities and representation manners of the uplink quality of service parameter and the downlink quality of service parameter.

S202 is a possible example of S102. For example, the profile of the uplink quality of service flow includes an uplink quality of service profile, and the profile of the downlink quality of service flow includes a downlink quality of service profile.

S202: The session management network element sends, to the access network element, an uplink quality of service profile and a downlink quality of service profile based on the parameter of the uplink quality of service flow and the parameter of the downlink quality of service flow, and correspondingly, the access network element receives, from the session management network element, the uplink quality of service profile and the downlink quality of service profile.

Each group of uplink quality of service profiles includes a data packet delay budget of the uplink quality of service flow, and each group of downlink quality of service profiles includes a data packet delay budget of the downlink quality of service flow. Data packet delay budgets that are of the uplink quality of service flow and that are included in a plurality of groups of uplink quality of service profiles include the target data packet delay budget of the uplink quality of service flow. Data packet delay budgets that are of the downlink quality of service flow and that are included in a plurality of groups of downlink quality of service profiles include the target data packet delay budget of the downlink quality of service flow.

For example, the plurality of groups of uplink quality of service profiles may be shown in Table 4, and include a QoS profile (Profile) #A to a QoS Profile #D. The plurality of groups of downlink quality of service profiles may be shown in Table 2, and include a QoS Profile #1 to a QoS Profile #4. Optionally, a sum of a largest value of data packet delay budgets included in the QoS profile (Profile) #A to the QoS Profile #D and a smallest value of data packet delay budgets included in the QoS Profile #1 to the QoS Profile #4 satisfies the round-trip latency requirement. A sum of a smallest value of the data packet delay budgets included in the QoS profile (Profile) #A to the QoS Profile #D and a largest value of the data packet delay budgets included in the QoS Profile #1 to the QoS Profile #4 satisfies the round-trip latency requirement.

**Table 3**

| Uplink quality of service profile |
|---|
| QoS Profile #A |
| QoS Profile #B |
| QoS Profile #C |
| QoS Profile #D |

**Table 4**

| Downlink quality of service profile |
|---|
| QoS Profile #1 |
| QoS Profile #2 |
| QoS Profile #3 |
| QoS Profile #4 |

It should be noted that Table 3 and Table 4 are merely examples, and do not limit group quantities and representation manners of the uplink quality of service profile and the downlink quality of service profile.

In the foregoing solution, the core network configures, for the radio access network element, the plurality of groups of uplink quality of service profiles and the plurality of groups of downlink quality of service profiles, and the radio access network element can autonomously select the target data packet delay budget of the uplink quality of service flow and the target data packet delay budget of the downlink quality of service flow from the plurality of groups of uplink quality of service profiles and the plurality of groups of downlink quality of service profiles. In this way, the access network element can dynamically and separately determine the target data packet delay budget of the uplink quality of service flow and the target data packet delay budget of the downlink quality of service flow based on a real-time network transmission status. In addition, in the foregoing solution, a case in which an updated uplink quality of service profile or an updated downlink quality of service profile is not authorized by the core network does not occur, so that quality of service profile updating performed by the core network does not need to be waited, and a round-trip control logic is simplified. The signaling interaction is further reduced, the overheads are reduced, and a service round-trip latency is quickly and flexibly controlled and guaranteed.

S203 and S204 are a possible example of S103. When the sum of the current data transmission latency of the uplink quality of service flow and the current data transmission latency of the downlink quality of service flow does not satisfy the round-trip latency requirement of the service, S203 and S204 are implemented in a plurality of manners, including but not limited to S203a and S204a, S203b and S204b, or S203c and S204c.

Solution 1: The access network element first adjusts a data packet delay budget of one of the uplink quality of service flow and the downlink quality of service flow, and then correspondingly adjusts a data packet delay budget of the other quality of service flow.

When the current data transmission latency of the uplink quality of service flow is greater than the data packet delay budget of the uplink quality of service flow, S203a and S204a are performed.

S203a: The access network element selects, from the plurality of groups of uplink quality of service profiles, the target data packet delay budget of the uplink quality of service flow based on the current data transmission latency of the uplink quality of service flow.

The target data packet delay budget of the uplink quality of service flow is greater than or equal to the current data transmission latency of the uplink quality of service flow.

S204a: The access network element selects, from the plurality of groups of downlink quality of service profiles, the target data packet delay budget of the downlink quality of service flow based on the target data packet delay budget of the uplink quality of service flow and the round-trip latency requirement.

For example, the target data packet delay budget of the downlink quality of service flow ≤ a difference obtained by subtracting the target data packet delay budget of the uplink quality of service flow from the round-trip latency requirement.

For another example, the access network element first selects the QoS Profile #A from Table 3, and a data packet delay budget #1 in the QoS Profile #A is the target data packet delay budget of the uplink quality of service flow. The access network element then selects, from Table 4, a downlink quality of service profile corresponding to a data packet delay budget that is less than or equal to a difference obtained by subtracting the data packet delay budget #1 from the round-trip latency requirement. Assuming that a data packet delay budget #2 in the QoS profile #4 is less than the difference, the data packet delay budget #2 is the target data packet delay budget of the uplink quality of service flow.

In the foregoing solution, when the current data transmission latency of the uplink quality of service flow is greater than the data packet delay budget of the uplink quality of service flow, the access network element adjusts the profile of the uplink quality of service flow, so that the target data packet delay budget of the uplink quality of service flow is greater than the current data transmission latency of the uplink quality of service flow, and therefore, quality of service of the uplink quality of service flow can be ensured, and user experience is improved. The access network element can determine the target data packet delay budget of the uplink quality of service flow and the target data packet delay budget of the downlink quality of service flow in a more real-time and more flexible manner, so that the round-trip latency requirement of the service is ensured, and service experience of a user is improved.

When the current data transmission latency of the downlink quality of service flow is greater than the data packet delay budget of the downlink quality of service flow, S203b and S204b are performed.

S203b: The access network element selects, from the plurality of groups of downlink quality of service profiles, the target data packet delay budget of the downlink quality of service flow based on the current data transmission latency of the downlink quality of service flow.

The target data packet delay budget of the downlink quality of service flow is greater than the current data transmission latency of the downlink quality of service flow.

S204b: The access network element selects, from the plurality of groups of uplink quality of service profiles, the target data packet delay budget of the uplink quality of service flow based on the target data packet delay budget of the downlink quality of service flow and the round-trip latency requirement.

For example, the target data packet delay budget of the uplink quality of service flow ≤ a difference obtained by subtracting the target data packet delay budget of the downlink quality of service flow from the round-trip latency requirement.

In the foregoing solution, when the current data transmission latency of the downlink quality of service flow is greater than the data packet delay budget of the downlink quality of service flow, the access network element adjusts the profile of the downlink quality of service flow, so that the target data packet delay budget of the downlink quality of service flow is greater than the current data transmission latency of the downlink quality of service flow, and therefore, quality of service of the downlink quality of service flow can be ensured, and user experience is improved. The access network element can determine the target data packet delay budget of the downlink quality of service flow and the target data packet delay budget of the downlink quality of service flow in a more real-time and more flexible manner, so that the round-trip latency requirement of the service is ensured, and service experience of a user is improved.

In Solution 1, the access network element can determine the target data packet delay budget of the uplink quality of service flow and the target data packet delay budget of the downlink quality of service flow in a more real-time and more flexible manner.

Solution 2: The access network element first pairs the uplink quality of service profile and the downlink quality of service profile based on the round-trip latency requirement, and then directly performs selection by using a quality of service profile pair as a granularity.

S203c: The access network element generates a plurality of quality of service profile pairs based on the round-trip latency requirement, the plurality of groups of uplink quality of service profiles, and the plurality of groups of downlink quality of service profiles.

Each quality of service profile pair includes an uplink quality of service profile and a downlink quality of service profile. In each quality of service profile pair, a sum of a data packet delay budget that is of the uplink quality of service flow and that is in the uplink quality of service profile and a data packet delay budget that is of the downlink quality of service flow and that is in the downlink quality of service profile satisfies the round-trip latency requirement. Data packet delay budgets that are of the uplink quality of service flow and that are included in the plurality of quality of service profile pairs include the target data packet delay budget of the uplink quality of service flow. Data packet delay budgets that are of the downlink quality of service flow and that are included in the plurality of quality of service profile pairs include the target data packet delay budget of the downlink quality of service flow.

The following uniformly describes a data packet delay budget included in a quality of service profile pair in this application. Details are not described again below. A data packet delay budget that is of the uplink quality of service flow and that is included in the quality of service profile pair in this application or a data packet delay budget that is of the downlink quality of service flow and that is included in the quality of service profile pair in this application may be an explicit data packet delay budget, for example, a value of the data packet delay budget, or may be other information that can indicate the data packet delay budget, or information that can be used to determine the data packet delay budget, for example, a 5QI. This is not limited in this application.

For example, the access network element generates Table 5 based on Table 3 and Table 4. As shown in Table 5, the quality of service profile pairs include a quality of service profile pair #1 to a quality of service profile pair #4. For example, the quality of service profile pair #4 includes the QoS Profile #D and the QoS Profile #4. In addition, in each of the quality of service profile pair #1 to the quality of service profile pair #4, a sum of a data packet delay budget included in an uplink quality of service profile and a data packet delay budget included in a downlink quality of service profile satisfies the round-trip latency requirement.

**Table 5**

| Quality of service profile pair | Uplink quality of service profile | Downlink quality of service profile |
|---|---|---|
| Quality of service profile pair #1 | QoS Profile #A | QoS Profile #1 |
| Quality of service profile pair #2 | QoS Profile #B | QoS Profile #2 |
| Quality of service profile pair #3 | QoS Profile #C | QoS Profile #3 |
| Quality of service profile pair #4 | QoS Profile #D | QoS Profile #4 |

It should be noted that Table 5 is merely an example, and does not limit a quantity, a representation manner, or a composition manner of the quality of service profile pairs. For example, information in Table 5 may be represented by using two tables. One table includes the 1^{st} column and the 2^{nd} column in Table 5, and the other table includes the 2^{nd} column and the 3^{rd} column in Table 5. Alternatively, another form may be used. This is not limited in this application.

S204c: The access network element selects a target quality of service profile pair from the plurality of quality of service profile pairs, where the target quality of service profile pair includes the target data packet delay budget of the uplink quality of service flow and the target data packet delay budget of the downlink quality of service flow.

The target data packet delay budget of the uplink quality of service flow is greater than or equal to the current data transmission latency of the uplink quality of service flow. The target data packet delay budget of the downlink quality of service flow is greater than or equal to the current data transmission latency of the downlink quality of service flow. It should be noted that a value relationship between the target data packet delay budget of the downlink quality of service flow and the data packet delay budget of the downlink quality of service flow is not limited in this application. The target data packet delay budget of the downlink quality of service flow may be greater than or equal to the data packet delay budget of the downlink quality of service flow, or may be less than the data packet delay budget of the downlink quality of service flow.

In an example, step a: When the current data transmission latency of the uplink quality of service flow is greater than the data packet delay budget of the uplink quality of service flow, the access network element selects, based on the current data transmission latency of the uplink quality of service flow, candidate quality of service profile pairs from the plurality of quality of service profile pairs. Data packet delay budgets that are of the uplink quality of service flow and that are included in the candidate quality of service profile pairs are greater than the current data transmission latency of the uplink quality of service flow. Step b: The access network element selects, based on the current data transmission latency of the downlink quality of service flow, the target quality of service profile pair from the candidate quality of service profile pairs.

In the foregoing solution, when the current data transmission latency of the uplink quality of service flow is greater than the data packet delay budget of the uplink quality of service flow, the access network element adjusts the profile of the uplink quality of service flow, so that the target data packet delay budget of the uplink quality of service flow is greater than the current data transmission latency of the uplink quality of service flow, and therefore, quality of service of the uplink quality of service flow can be ensured, and user experience is improved. The access network element can determine the target data packet delay budget of the uplink quality of service flow and the target data packet delay budget of the downlink quality of service flow in a more real-time and more flexible manner, so that the round-trip latency requirement of the service is ensured, and service experience of a user is improved.

In an example, step a: When the current data transmission latency of the downlink quality of service flow is greater than the data packet delay budget of the downlink quality of service flow, the access network element selects, based on the current data transmission latency of the downlink quality of service flow, candidate quality of service profile pairs from the plurality of quality of service profile pairs. Data packet delay budgets that are of the downlink quality of service flow and that are included in the candidate quality of service profile pairs are greater than the current data transmission latency of the downlink quality of service flow. Step b: The access network element selects, based on the current data transmission latency of the uplink quality of service flow, the target quality of service profile pair from the candidate quality of service profile pairs.

In the foregoing solution, when the current data transmission latency of the downlink quality of service flow is greater than the data packet delay budget of the downlink quality of service flow, the access network element adjusts the profile of the downlink quality of service flow, so that the target data packet delay budget of the downlink quality of service flow is greater than the current data transmission latency of the downlink quality of service flow, and therefore, quality of service of the downlink quality of service flow can be ensured, and user experience is improved. The access network element can determine the target data packet delay budget of the downlink quality of service flow and the target data packet delay budget of the downlink quality of service flow in a more real-time and more flexible manner, so that the round-trip latency requirement of the service is ensured, and service experience of a user is improved.

Optionally, the candidate quality of service profile pairs may include one or more quality of service profile pairs.

The following provides another example with reference to Table 5. When the current data transmission latency of the uplink quality of service flow is greater than the data packet delay budget (for example, referred to as a latency #x) of the uplink quality of service flow, the target data packet delay budget that is of the uplink quality of service flow and that is included in the target quality of service profile pair determined by the access network element needs to be greater than or equal to the latency #x. It is assumed that data packet delay budgets that are of the uplink quality of service flow and that correspond to the quality of service profile pair #1 and the quality of service profile pair #2 in Table 5 are greater than or equal to the latency #x. In a possible implementation 1, assuming that a data packet delay budget that is of the downlink quality of service flow and that corresponds to the quality of service profile pair #1 is less than the current data transmission latency of the downlink quality of service flow, the quality of service profile pair #1 cannot be used as the target quality of service profile pair. Assuming that a data packet delay budget that is of the downlink quality of service flow and that corresponds to the quality of service profile pair #2 is greater than or equal to the current data transmission latency of the downlink quality of service flow, the quality of service profile pair #2 can be used as the target quality of service profile pair. In a possible implementation 2, it is assumed that, in the quality of service profile pair #1 and the quality of service profile pair #2, target data packet delay budgets of the uplink quality of service flow are greater than or equal to the current data transmission latency of the uplink quality of service flow, and target data packet delay budgets of the downlink quality of service flow are greater than or equal to the current data transmission latency of the downlink quality of service flow. Assuming that a target data packet delay budget that is of the downlink quality of service flow and that is in the quality of service profile pair #2 is less than a target data packet delay budget that is of the downlink quality of service flow and that is in the quality of service profile pair #1, the quality of service profile pair #2 can be used as the target quality of service profile pair.

For example, the access network element selects, from Table 5, the quality of service profile pair #2 as the target quality of service profile pair, a data packet delay budget included in the QoS profile #B as the target data packet delay budget of the uplink quality of service flow, and a data packet delay budget included in the QoS profile #2 as the target data packet delay budget of the downlink quality of service flow.

In Solution 2, the access network element can more efficiently determine the target data packet delay budget of the uplink quality of service flow and the target data packet delay budget of the downlink quality of service flow by determining the target quality of service profile pair. In addition, when the round-trip latency requirement of the service, the profile of the uplink quality of service flow, and the profile of the uplink quality of service flow remain unchanged, the access network element may generate the plurality of quality of service profile pairs only once. The access network element stores the plurality of quality of service profile pairs. When the sum of the current data transmission latency of the uplink quality of service flow and the current data transmission latency of the downlink quality of service flow does not satisfy the round-trip latency requirement of the service again, the plurality of quality of service profile pairs may be directly invoked. A real-time processing logic of the access network element is further simplified, and efficiency of controlling the round-trip latency is improved.

The following describes a method 200'. S200' includes steps S201' to S204'. For steps S201' and S202', refer to related descriptions of S201 in the method 200 and S203 (S203a or S203b) that corresponds to Solution 1. A difference is as follows.

In the method 200', a prerequisite of performing S203' (including S203a' and S203b') is not limited to that the sum of the current data transmission latency of the uplink quality of service flow and the current data transmission latency of the downlink quality of service flow does not satisfy the round-trip latency requirement of the service.

S203' and S204' are implemented in a plurality of manners, including but not limited to S203a' and S204a', or S203b' and S204b'.

S204a': After the access network element performs S203a', if the current data transmission latency of the downlink quality of service flow is less than or equal to the data packet delay budget of the downlink quality of service flow, and a sum of the data packet delay budget of the downlink quality of service flow and the target data packet delay budget of the uplink quality of service flow satisfies the round-trip latency requirement, the access network element may determine the data packet delay budget of the downlink quality of service flow as the target data packet delay budget of the downlink quality of service flow.

S204b': After the access network element performs S203b', if the current data transmission latency of the uplink quality of service flow is less than or equal to the data packet delay budget of the uplink quality of service flow, and a sum of the data packet delay budget of the uplink quality of service flow and the target data packet delay budget of the downlink quality of service flow satisfies the round-trip latency requirement, the access network element may determine the data packet delay budget of the uplink quality of service flow as the target data packet delay budget of the uplink quality of the flow.

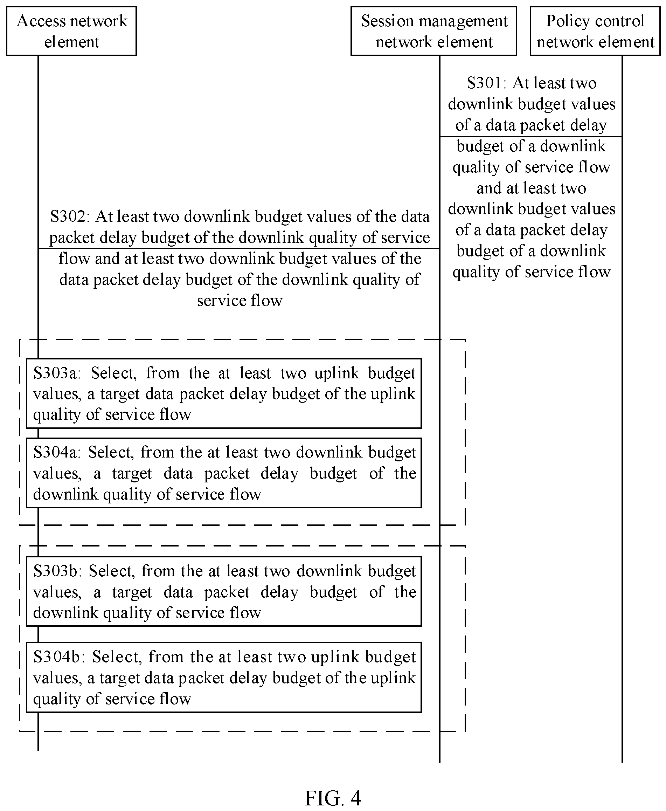

FIG. 4 is a schematic diagram of a latency control method 300 according to this application. With reference to FIG. 4, the following describes in detail the latency control method 300 provided in this application.

Case 1: In the method 300, the profile of the uplink quality of service flow in the method 100 is described by using at least two uplink budget values of a data packet delay budget of the uplink quality of service flow as an example, and the profile of the downlink quality of service flow is described by using at least two downlink budget values of a data packet delay budget of the downlink quality of service flow as an example. The parameter of the uplink quality of service flow in the method 100 is described by using a plurality of groups of uplink quality of service parameters as an example, and the parameter of the downlink quality of service flow is described by using a plurality of groups of downlink quality of service parameters as an example.

Alternatively, Case 2: In the method 300, the parameter of the uplink quality of service flow in the method 100 is described by using information indicating at least two uplink budget values of a data packet delay budget of the uplink quality of service flow as an example, and the parameter of the downlink quality of service flow is described by using information indicating at least two downlink budget values of a data packet delay budget of the downlink quality of service flow as an example.

For example, a 5QI may be enhanced, so that the 5QI can indicate at least two specific values of the data packet delay budget of the uplink quality of service flow. Alternatively, the solution of this application may be implemented by using other information having a similar function. This is not limited herein.

Alternatively, the information indicating the at least two uplink budget values of the data packet delay budget of the uplink quality of service flow may be replaced with information for determining the at least two uplink budget values of the data packet delay budget of the uplink quality of service flow. The information indicating the at least two downlink budget values of the data packet delay budget of the downlink quality of service flow may be replaced with information for determining the at least two downlink budget values of the data packet delay budget of the downlink quality of service flow.

The following describes the method 300 by using Case 1 as an example.

S301 is a possible example of S101. For example, the parameter of the uplink quality of service flow includes at least two uplink budget values of a data packet delay budget of the uplink quality of service flow, and the parameter of the downlink quality of service flow includes at least two downlink budget values of a data packet delay budget of the downlink quality of service flow.

S301: The policy control network element sends at least two uplink budget values of a data packet delay budget of the uplink quality of service flow and at least two downlink budget values of a data packet delay budget of the downlink quality of service flow to the session management network element, and correspondingly, the session management network element receives, from the policy control network element, the at least two uplink budget values of the data packet delay budget of the uplink quality of service flow and the at least two downlink budget values of the data packet delay budget of the downlink quality of service flow.

The at least two uplink budget values include the target data packet delay budget of the uplink quality of service flow, and the at least two downlink budget values include the target data packet delay budget of the downlink quality of service flow.

It should be noted that the at least two uplink budget values may be understood as a value range or a set. The set includes at least two data packet delay budgets of the uplink quality of service flow. The at least two downlink budget values may be understood as a value range or a set. The set includes at least two data packet delay budgets of the downlink quality of service flow.

For example, the at least two uplink budget values are a set #A, and the set #A includes {a value #1, a value #2, a value #3, a value #4, a value #5}. The at least two downlink budget values are a set #B, and the set #B includes {a value #a, a value #b, a value #c, a value #d, a value #e}. Optionally, a sum of a largest value of the set #A and a smallest value of the set #B satisfies the round-trip latency requirement, and a sum of a largest value of the set #B and a smallest value of the set #A satisfies the round-trip latency requirement.

For another example, the at least two uplink budget values belong to a value range #A, and a value #1 ≤ the value range #A ≤ a value #5. The at least two downlink budget values belong to a value range #B, and a value #a ≤ the value range #B ≤ a value #e. Optionally, a sum of a largest value of the value range #A and a smallest value of the value range #B satisfies the round-trip latency requirement, and a sum of a largest value of the value range #B and a smallest value of the value range #A satisfies the round-trip latency requirement.

S302 is a possible example of S102. For example, the profile of the uplink quality of service flow includes at least two uplink budget values of a data packet delay budget of the uplink quality of service flow, and the profile of the downlink quality of service flow includes at least two downlink budget values of a data packet delay budget of the uplink quality of service flow.

In the foregoing solution, one profile of the uplink quality of service flow or one profile of the downlink quality of service flow each includes more than one data packet delay budget, so that a manner of configuring quality of service in an entire system is more flexible. In comparison with a manner in which the core network sends, to the access network element, a quality of service profile including only one fixed data packet delay budget, in the foregoing solution, more data packet delay budgets can be configured for the access network element when resource overheads are almost not increased, so that the access network element can dynamically re-determine, based on a real-time network transmission status, a data packet delay budget corresponding to the quality of service profile. In addition, after the access network element re-determines the data packet delay budget corresponding to the quality of service profile, a case in which an updated quality of service profile is not authorized by the core network does not occur, so that quality of service profile updating performed by the core network does not need to be waited, and a round-trip control logic is simplified. The signaling interaction is further reduced, the overheads are reduced, and a service round-trip latency is quickly and flexibly controlled and guaranteed.

S302: The session management network element sends, to the access network element, the at least two uplink budget values of the data packet delay budget of the uplink quality of service flow and the at least two downlink budget values of the data packet delay budget of the downlink quality of service flow based on the parameter of the uplink quality of service flow and the parameter of the downlink quality of service flow, and correspondingly, the access network element receives, from the session management network element, the at least two uplink budget values of the data packet delay budget of the uplink quality of service flow and the at least two downlink budget values of the data packet delay budget of the downlink quality of service flow.

For example, the access network element receives, from the session management network element, one profile of the uplink quality of service flow. The profile of the uplink quality of service flow does not include a fixed value of the data packet delay budget of the uplink quality of service flow, but includes a plurality of values of the data packet delay budget of the uplink quality of service flow. For details, refer to a related example in S301. The profile of the downlink quality of service flow is similar to the profile of the uplink quality of service flow, and details are not described herein again.

S303 and S304 are a possible example of S103. S303 and S304 are implemented in a plurality of manners, including but not limited to S303a and S304a, or S303b and S304b. The access network element first determines a data packet delay budget of one of the uplink quality of service flow and the downlink quality of service flow, and then correspondingly determines a data packet delay budget of the other quality of service flow.

When the current data transmission latency of the uplink quality of service flow is greater than the data packet delay budget of the uplink quality of service flow, S303a and S304a are performed.

S303a: The access network element selects, from the at least two uplink budget values, the target data packet delay budget of the uplink quality of service flow based on the current data transmission latency of the uplink quality of service flow.

The target data packet delay budget of the uplink quality of service flow is greater than the current data transmission latency of the uplink quality of service flow.

For example, the current data transmission latency of the uplink quality of service flow is a value #x, and the access network element selects, from the set #A, an uplink budget value greater than the value #x, for example, the value #4 and the value #5.

S304a: The access network element selects, from the at least two downlink budget values, the target data packet delay budget of the downlink quality of service flow based on the target data packet delay budget of the uplink quality of service flow and the round-trip latency requirement of the service.

For another example, with reference to the example in S303a, the access network element selects, from the set #B, the target data packet delay budget of the downlink quality of service flow. A sum of the target data packet delay budget and the value #4 satisfies the round-trip latency requirement, or a sum of the target data packet delay budget and the value #5 satisfies the round-trip latency requirement.

In the foregoing solution, when the current data transmission latency of the uplink quality of service flow is greater than the data packet delay budget of the uplink quality of service flow, the access network element adjusts the profile of the uplink quality of service flow, so that the target data packet delay budget of the uplink quality of service flow is greater than the current data transmission latency of the uplink quality of service flow, and therefore, quality of service of the uplink quality of service flow can be ensured, and user experience is improved. The access network element can determine the target data packet delay budget of the uplink quality of service flow and the target data packet delay budget of the downlink quality of service flow in a more real-time and more flexible manner, so that the round-trip latency requirement of the service is ensured, and service experience of a user is improved.

Alternatively, after the access network element performs S303a, if the current data transmission latency of the downlink quality of service flow is less than or equal to the data packet delay budget of the downlink quality of service flow, and a sum of the data packet delay budget of the downlink quality of service flow and the target data packet delay budget of the uplink quality of service flow satisfies the round-trip latency requirement, the access network element may determine the data packet delay budget of the downlink quality of service flow as the target data packet delay budget of the downlink quality of service flow. S304a is skipped.

When the current data transmission latency of the downlink quality of service flow is greater than the data packet delay budget of the downlink quality of service flow, S303b and S304b are performed.

S303b: The access network element selects, from the at least two downlink budget values, the target data packet delay budget of the downlink quality of service flow based on the current data transmission latency of the downlink quality of service flow.

The target data packet delay budget of the downlink quality of service flow is greater than the current data transmission latency of the downlink quality of service flow.

S304b: The access network element selects, from the at least two uplink budget values, the target data packet delay budget of the uplink quality of service flow based on the target data packet delay budget of the downlink quality of service flow and the round-trip latency requirement of the service.

For an example of S303b and S304b, refer to descriptions of the example of S303a and S304a. A difference lies in that uplink in S303a and S304a is replaced with downlink in S303b and S304b, and downlink in S303a and S304a is replaced with uplink in S303b and S304b.

In the foregoing solution, when the current data transmission latency of the downlink quality of service flow is greater than the data packet delay budget of the downlink quality of service flow, the access network element adjusts the profile of the downlink quality of service flow, so that the target data packet delay budget of the downlink quality of service flow is greater than the current data transmission latency of the downlink quality of service flow, and therefore, quality of service of the downlink quality of service flow can be ensured, and user experience is improved. The access network element can determine the target data packet delay budget of the downlink quality of service flow and the target data packet delay budget of the downlink quality of service flow in a more real-time and more flexible manner, so that the round-trip latency requirement of the service is ensured, and service experience of a user is improved.

Alternatively, after the access network element performs S303b, if the current data transmission latency of the uplink quality of service flow is less than or equal to the data packet delay budget of the uplink quality of service flow, and a sum of the data packet delay budget of the uplink quality of service flow and the target data packet delay budget of the downlink quality of service flow satisfies the round-trip latency requirement, the access network element may determine the data packet delay budget of the uplink quality of service flow as the target data packet delay budget of the uplink quality of the flow. S304b is skipped.

For example, in the method 300, the profile of the uplink quality of service flow may be an uplink quality of service profile, and the profile of the downlink quality of service flow may be a downlink quality of service profile.

In the foregoing solution, one profile of the uplink quality of service flow or one profile of the downlink quality of service flow each includes more than one data packet delay budget, so that a manner of configuring quality of service in an entire system is more flexible. In comparison with a manner in which the core network sends, to the access network element, a quality of service profile including only one fixed data packet delay budget, in the foregoing solution, when resource overheads are almost not increased, the access network element can re-determine a data packet delay budget corresponding to the quality of service profile. In addition, after the access network element re-determines the data packet delay budget corresponding to the quality of service profile, a case in which an updated quality of service profile is not authorized by the core network does not occur. Therefore, the updated quality of service profile may not be sent to the core network, so that the signaling interaction is further reduced, and the overheads are reduced.

It should be noted that, in the method 200 and the method 300, the access network element needs to obtain the round-trip latency requirement. For example, the round-trip latency requirement may be preconfigured in the access network element, or may be received by the access network element from another network element (for example, the session management network element). This is not limited in this application. For example, the session management network element sends at least one of the profile of the uplink quality of service flow and the profile of the downlink quality of service flow together with the round-trip latency requirement to the access network element. Alternatively, the round-trip latency requirement is carried in the profile of the uplink quality of service flow and/or the profile of the downlink quality of service flow. For another example, the round-trip latency requirement is carried in the association indication information #2 in Example 2-2 and/or Example 3-3 in the method 100. Therefore, the association indication information #2 may further explicitly indicate that the uplink quality of service flow and the downlink quality of service flow need to satisfy the round-trip latency requirement. Alternatively, the association indication information #2 may further implicitly indicate the access network element to perform coordinated adjustment on the quality of service profile of the uplink quality of service flow and the quality of service profile of the downlink quality of service flow based on the association indication information #2.

For another example, when the access network element receives the round-trip latency requirement from the session management network element, the round-trip latency requirement may be preconfigured in the session management network element, or may be received by the session management network element from another network element (for example, the policy control network element). This is not limited in this application. For example, the policy control network element sends at least one of the parameter of the uplink quality of service flow and the parameter of the downlink quality of service flow together with the round-trip latency requirement to the session management network element. Alternatively, the round-trip latency requirement is carried in the parameter of the uplink quality of service flow and/or the parameter of the downlink quality of service flow.

Optionally, in the method 200 and the method 300, the latency control indication information in the method 100 specifically triggers the access network element to determine, from the profile of the uplink quality of service flow and the profile of the downlink quality of service flow, the target data packet delay budget of the uplink quality of service flow and the target data packet delay budget of the downlink quality of service flow based on the round-trip latency requirement.

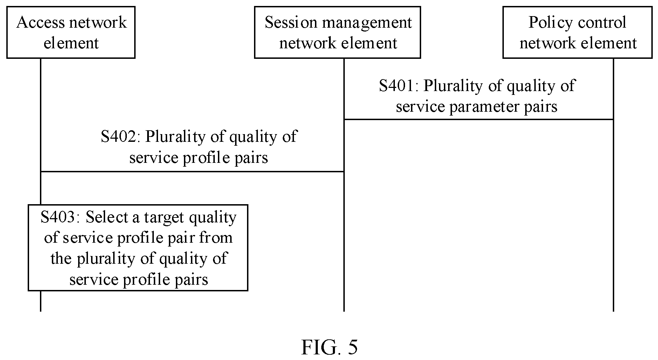

FIG. 5 is a schematic diagram of a latency control method 400 according to this application. With reference to FIG. 5, the following describes in detail the latency control method 400 provided in this application. In the method 400, the profile of the uplink quality of service flow and the profile of the downlink quality of service flow in the method 100 are described by using a plurality of quality of service profile pairs as an example. The parameter of the uplink quality of service flow and the parameter of the downlink quality of service flow in the method 100 are described by using a plurality of quality of service parameter pairs as an example.

S401 is a possible example of S101. For example, the parameter of the uplink quality of service flow and the parameter of the downlink quality of service flow include a plurality of quality of service parameter pairs.

S401: The policy control network element sends a plurality of quality of service parameter pairs to the session management network element, and correspondingly, the session management network element receives the plurality of quality of service parameter pairs from the policy control network element.

Each quality of service parameter pair includes an uplink quality of service parameter and a downlink quality of service parameter. A sum of a data packet delay budget in the uplink quality of service parameter included in each quality of service parameter pair and a data packet delay budget in the downlink quality of service parameter included in each quality of service parameter pair satisfies the round-trip latency requirement.

For example, the plurality of quality of service parameter pairs may be shown in Table 6. Table 6 includes a quality of service parameter pair #1 to a quality of service parameter pair #4. The uplink quality of service parameter and the downlink quality of service parameter included in each quality of service parameter pair are shown in the 2^{nd} column and the 3^{rd} column in Table 6.

**Table 6**

| Quality of service parameter pair | Uplink quality of service parameter | Downlink quality of service parameter |
|---|---|---|
| Quality of service parameter pair #1 | QoS Parameter #A | QoS Parameter #1 |
| Quality of service parameter pair #2 | QoS Parameter #B | QoS Parameter #2 |
| Quality of service parameter pair #3 | QoS Parameter #C | QoS Parameter #3 |
| Quality of service parameter pair #4 | QoS Parameter #D | QoS Parameter #4 |

It should be noted that Table 6 is merely an example, and does not limit a quantity, a representation manner, or a composition manner of the quality of service parameter pairs.

In the foregoing solution, the core network sends, to the access network element, the plurality of quality of service profile pairs that are already determined based on the round-trip latency requirement of the service, so that the access network element can directly select a target profile pair based on the plurality of quality of service profile pairs.

S402 is a possible example of S102. For example, the profile of the uplink quality of service flow and the profile of the downlink quality of service flow include a plurality of quality of service profile pairs.

S402: The session management network element sends a plurality of quality of service profile pairs to the access network element based on the plurality of quality of service parameter pairs, and correspondingly, the access network element receives the plurality of quality of service profile pairs from the session management network element.

Each quality of service profile pair includes an uplink quality of service profile and a downlink quality of service profile. A sum of a data packet delay budget in the uplink quality of service profile included in each quality of service profile pair and a data packet delay budget in the downlink quality of service profile included in each quality of service profile pair satisfies the round-trip latency requirement.

For example, the plurality of quality of service profile pairs may be shown in Table 7. Table 7 includes a quality of service profile pair #1 to a quality of service profile pair #4. The uplink quality of service profile and the downlink quality of service profile included in each quality of service profile pair are shown in the 2^{nd} column and the 3^{rd} column in Table 7.

**Table 7**

| Quality of service profile pair | Uplink quality of service profile | Downlink quality of service profile |
|---|---|---|
| Quality of service profile pair #1 | QoS Profile #A | QoS Profile #1 |
| Quality of service profile pair #2 | QoS Profile #B | QoS Profile #2 |
| Quality of service profile pair #3 | QoS Profile #C | QoS Profile #3 |
| Quality of service profile pair #4 | QoS Profile #D | QoS Profile #4 |

It should be noted that Table 7 is merely an example, and does not limit a quantity, a representation manner, or a composition manner of the uplink quality of service profile pairs. For example, information in Table 7 may be represented by using two tables. One table includes the 1^{st} column and the 2^{nd} column in Table 7, and the other table includes the 2^{nd} column and the 3^{rd} column in Table 7. Alternatively, another form may be used. This is not limited in this application.

For another example, the plurality of quality of service profile pairs may be represented in the following manner. Uplink quality of service profile: a quality of service profile pair #1, a QoS Profile #A; a quality of service profile pair #2, a QoS Profile #B. Downlink quality of service profile: a quality of service profile pair #1, a QoS Profile #1; a quality of service profile pair #2, a QoS Profile #2. It should be noted that this manner does not limit a quantity, a representation manner, or a composition manner of the uplink quality of service profile pairs.

S403 is a possible example of S103.

S403: The access network element selects a target quality of service profile pair from the plurality of quality of service profile pairs.

The target quality of service profile pair includes the data packet delay budget of the uplink quality of service flow and the target data packet delay budget of the downlink quality of service flow.

For details, refer to descriptions of S204c in the method 200.

For example, the access network element selects the target quality of service profile pair from Table 7 based on the current data transmission latency of the uplink quality of service flow and the current data transmission latency of the downlink quality of service flow. The target data packet delay budget of the uplink quality of service flow is greater than or equal to the current data transmission latency of the uplink quality of service flow. The target data packet delay budget of the downlink quality of service flow is greater than or equal to the current data transmission latency of the downlink quality of service flow.

It should be noted that, in the method 400, the access network element may not obtain the round-trip latency requirement. If the access network element needs to obtain the round-trip latency requirement, refer to corresponding descriptions in the method 200 and the method 300. Details are not described herein again.

In the foregoing solution, the access network element does not need to obtain the round-trip latency requirement of the service, and does not need to process, based on the round-trip latency requirement of the service, a quality of service profile delivered by the core network. A processing procedure of the access network element can be further reduced on a basis that the signaling interaction between the access network element and the core network is reduced, so that consumption of the access network element is reduced.

Beneficial effects of the method 200 to the method 400 are further beneficial effects based on beneficial effects of the method 100.

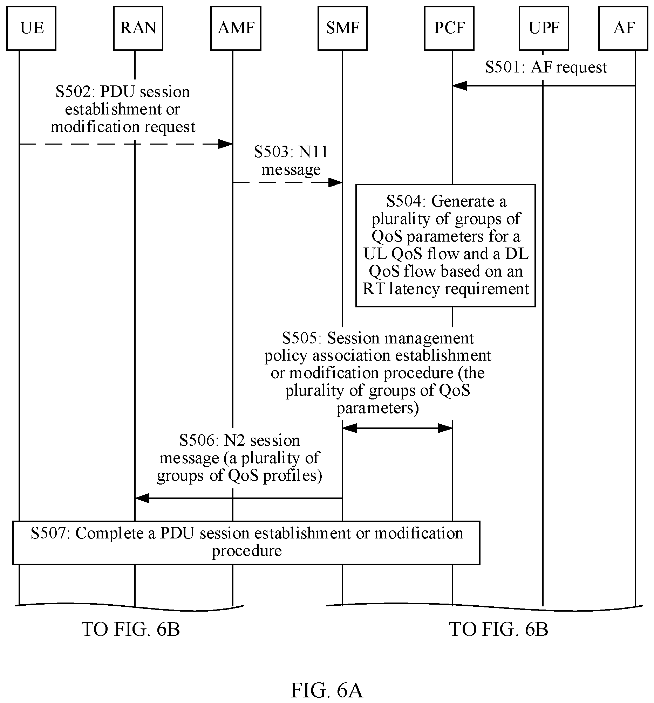

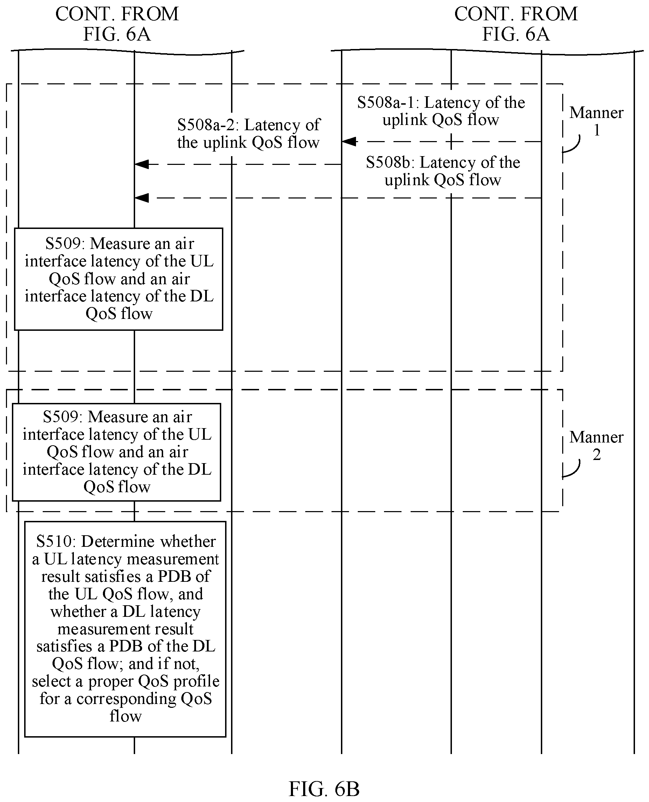

FIG. 6A and FIG. 6B are a schematic diagram of a latency control method 500 according to this application. With reference to FIG. 6A and FIG. 6B, the following describes in detail the latency control method 500 provided in this application. The method 500 is a possible implementation of the method 100, and may also be understood as an example of the method 200. An example in which an access network element is a RAN, a policy control network element is a PCF, a session management network element is an SMF, and quality of service is QoS is used for description.

S501: An AF sends an RT latency requirement and corresponding service flow description information, for example, a service data flow (service data flow, SDF), to a PCF through a capability exposure interface, and correspondingly, the PCF receives the RT latency requirement and the corresponding service flow description information from the AF.

For example, if the AF is in a trusted domain, the AF may directly interact with the PCF, that is, invoke a service interface of the PCF, for example, an Npcf_Policy Authorization service interface. If the AF is in an untrusted domain, the AF needs to interact with the PCF by using an NEF. The AF invokes a service interface of the NEF, for example, the Nnef_AFSessionWithQoS service interface. Then, the NEF correspondingly invokes a service interface of the PCF.

S504: The PCF generates a plurality of groups of QoS parameters for an uplink (uplink, UL) QoS flow and a downlink (downlink, DL) QoS flow based on the RT latency requirement.

For the plurality of groups of QoS parameters, refer to descriptions of the plurality of groups of quality of service parameters in the method 200.

A PDU session establishment or modification procedure between UE and a core network may be initiated by the UE or the PCF.

Optionally, the UE initiates the PDU session establishment or modification procedure, and the method 500 further includes S502 to S505.

S502: The LTE sends a PDU session establishment or modification request to an AMF, and correspondingly, the AMF receives the PDU session establishment or modification request from the UE. Specifically, the UE sends the PDU session establishment or modification request message to the AMF by using a RAN.

S503: The AMF sends an N11 message to an SMF, and correspondingly, the SMF receives the N11 message from the SMF.

The N11 message carries the PDU session establishment or modification request.

Then, the SMF actively initiates a session management policy association establishment or modification procedure.

S505: The PCF sends the plurality of groups of QoS parameters to the SMF based on the session management policy association establishment or modification procedure, and correspondingly, the SMF receives, from the PCF, the plurality of groups of QoS parameters based on the session management policy association establishment or modification procedure.

The plurality of groups of QoS parameters are carried in a policy and charging control (policy and charging control, PCC) rule.

Optionally, the PCF initiates the PDU session establishment or modification procedure, and the method 500 further includes S505.

The PCF actively initiates a session management policy association establishment or modification procedure.

S505: The PCF sends the plurality of groups of QoS parameters to the SMF based on the session management policy association establishment or modification procedure, and correspondingly, the SMF receives, from the PCF, the plurality of groups of QoS parameters based on the session management policy association establishment or modification procedure.

The plurality of groups of QoS parameters are carried in a PCC rule.

S505 may be understood as a specific example of S201.

S506: The SMF sends an N2 session message to the RAN, and correspondingly, the RAN receives the N2 session message from the SMF. The N2 session message carries a plurality of groups of QoS profiles.

S506 may be understood as a specific example of S202. For descriptions of generating, by the SMF, the plurality of groups of QoS profiles based on the plurality of groups of QoS parameters and descriptions of the plurality of groups of QoS profiles, refer to corresponding descriptions in the method 200. Specifically, the SMF sends the N2 session message to the RAN via the AMF.

S507: The UE and the core network complete the remaining PDU session establishment or modification procedure. For details, refer to section 4.3.2.1 in TS 23.502.

In the following, the RAN may obtain a current data transmission latency of the UL QoS flow and a current data transmission latency of the DL QoS flow in Manner 1 or Manner 2 shown in FIG. 6A and FIG. 6B. Manner 1 and Manner 2 in the method 500 may be specific examples of Example 3-1 in the method 100.

Manner 1 in FIG. 6A and FIG. 6B corresponds to Manner 1 in Example 3-1. S508a-1 and S508a-2, and S508b are two implementations of step 2-2. For S509, refer to step 2-1.

In Manner 1 in FIG. 6A and FIG. 6B, the method 500 may further include: In S504, the PCF further generates a QoS measurement policy, to assist in measuring uplink and downlink latencies of uplink and downlink QoS flows. In S506, the SMF further generates a corresponding QoS measurement profile based on the QoS measurement policy. The SMF sends the QoS measurement profile to the RAN, and correspondingly, the RAN receives the QoS measurement profile from the SMF. The UPF also receives the QoS measurement profile from the SMF.

Manner 2 in FIG. 6A and FIG. 6B corresponds to Manner 2 in Example 3-1. For S509, refer to step 3-1.

S510: The RAN determines whether a UL latency measurement result satisfies a data packet delay budget (packet delay budget, PDB) of the UL QoS flow, and whether a DL latency measurement result satisfies a PDB of the DL QoS flow.

If the UL latency measurement result does not satisfy the data packet delay budget of the UL QoS flow, and the DL latency measurement result does not satisfy the PDB of the DL QoS flow, the RAN selects a proper QoS profile for a corresponding QoS flow.

For S510, refer to corresponding descriptions in S203.

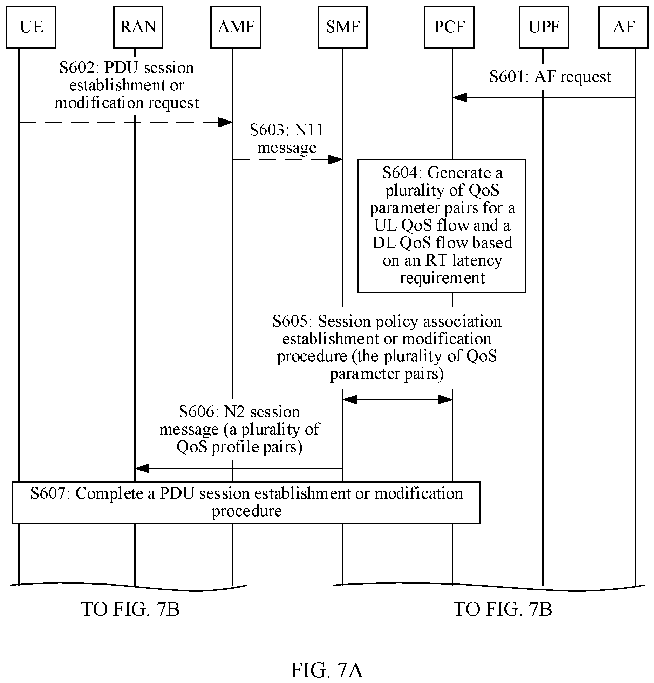

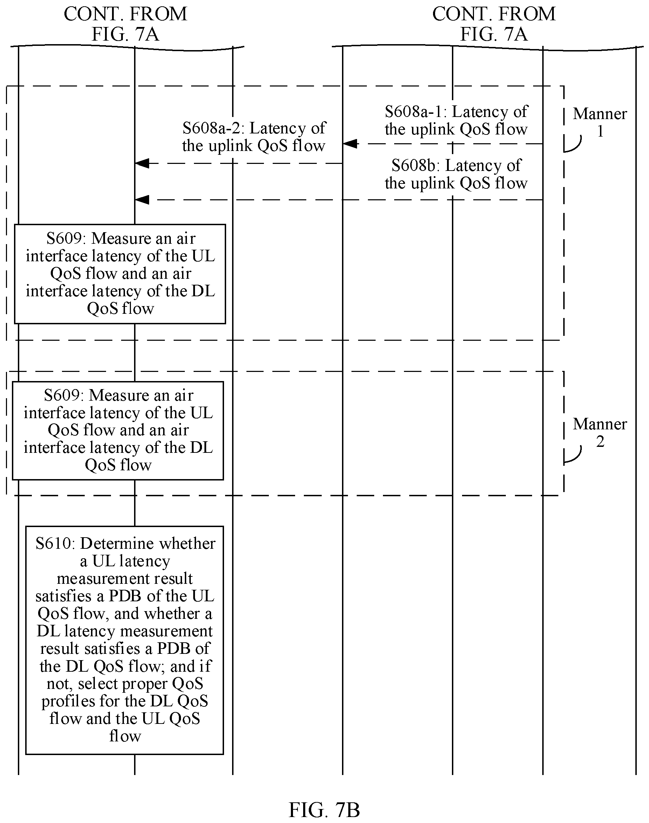

FIG. 7A and FIG. 7B are a schematic diagram of a latency control method 600 according to this application. With reference to FIG. 7A and FIG. 7B, the following describes in detail the latency control method 600 provided in this application. The method 600 is a possible implementation of the method 100, and may also be understood as an example of the method 400. An example in which an access network element is a RAN, a policy control network element is a PCF, a session management network element is an SMF, and quality of service is QoS is used for description.

For S601 to S609, refer to descriptions of S501 to S509. A difference is as follows.

The plurality of groups of QoS parameters in S504 and S505 are replaced with a plurality of QoS parameter pairs in S604 and S605. For descriptions of the QoS parameter pair, refer to related descriptions in the method 400.

The plurality of groups of QoS profiles in S506 are replaced with a plurality of QoS profile pairs in S606. For descriptions of the QoS profile pair, refer to related descriptions in the method 400.

For S610, refer to corresponding descriptions in S403.

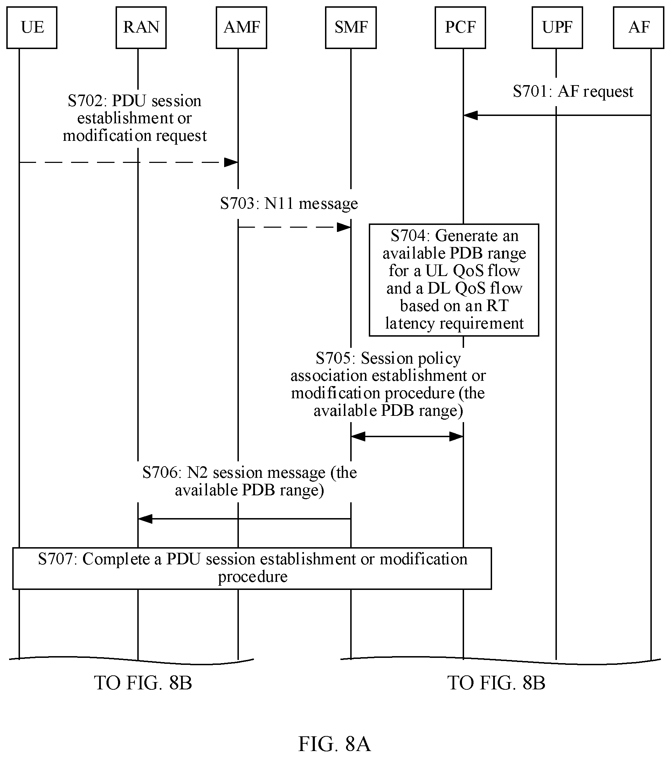

FIG. 8A and FIG. 8B are a schematic diagram of a latency control method 700 according to this application. With reference to FIG. 8A and FIG. 8B, the following describes in detail the latency control method 700 provided in this application. The method 700 is a possible implementation of the method 100, and may also be understood as an example of the method 300. An example in which an access network element is a RAN, a policy control network element is a PCF, a session management network element is an SMF, and quality of service is QoS is used for description.

For S701 to S709, respectively refer to descriptions of S501 to S509. A difference is as follows.

The plurality of groups of QoS parameters in S504 and S505 are replaced with an available PDB range of the UL QoS flow and the DL QoS flow in S704 and S705, or a QoS parameter that includes an available PDB range. For details of the available PDB range herein, refer to descriptions of the at least two uplink budget values of the data packet delay budget of the uplink quality of service flow and the at least two downlink budget values of the data packet delay budget of the downlink quality of service flow in the method 300.

The plurality of groups of QoS profiles in S506 are replaced with the available PDB range or a QoS profile that includes the available PDB range in S706.

For S710, refer to corresponding descriptions in S303.

For beneficial effects of the method 500 to the method 700, refer to beneficial effects of the foregoing corresponding embodiments.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

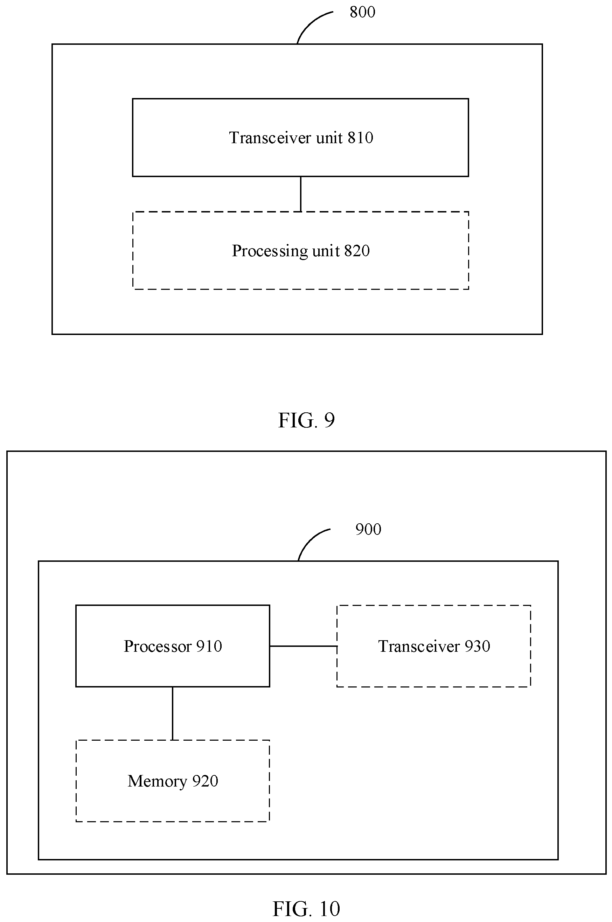

FIG. 9 is a schematic diagram of a latency control apparatus 800 to which this application is applicable. The apparatus 800 includes a transceiver unit 810, and the transceiver unit 810 may be configured to implement a corresponding communication function. The transceiver unit 810 may also be referred to as a communication interface or a communication unit.

Optionally, the apparatus 800 may further include a processing unit 820, and the processing unit 820 may be configured to perform data processing.

Optionally, the apparatus 800 further includes a storage unit. The storage unit may be configured to store instructions and/or data. The processing unit 820 may read the instructions and/or the data in the storage unit, to enable the apparatus to implement actions performed by the communication device (for example, the access network element, the policy control network element, or the session management network element) in the foregoing method embodiments.

The apparatus 800 may be configured to perform the actions performed by the communication device (for example, the access network element, the policy control network element, or the session management network element) in the foregoing method embodiments. In this case, the apparatus 800 may be a component of the communication device (for example, the access network element, the policy control network element, or the session management network element). The transceiver unit 810 is configured to perform receiving and sending related operations on a side of the communication device (for example, the access network element, the policy control network element, or the session management network element) in the foregoing method embodiments. The processing unit 820 is configured to perform a processing-related operation on the side of the communication device (for example, the access network element, the policy control network element, or the session management network element) in the foregoing method embodiments.

In a design, the apparatus 800 is configured to perform actions performed by the access network element in the foregoing method embodiments.

Specifically, the transceiver unit 810 is configured to receive, from a session management network element, a profile of an uplink quality of service flow and a profile of a downlink quality of service flow. The uplink quality of service flow and the downlink quality of service flow are respectively for transmitting uplink data and downlink data of a service. When a sum of a current data transmission latency of the uplink quality of service flow and a current data transmission latency of the downlink quality of service flow does not satisfy a round-trip latency requirement of the service, the processing unit 820 is configured to determine, from the profile of the uplink quality of service flow and the profile of the downlink quality of service flow, a target data packet delay budget of the uplink quality of service flow and a target data packet delay budget of the downlink quality of service flow. The target data packet delay budget of the uplink quality of service flow and the target data packet delay budget of the downlink quality of service flow satisfy the round-trip latency requirement.

Optionally, when the current data transmission latency of the uplink quality of service flow is greater than the data packet delay budget of the uplink quality of service flow, the processing unit 820 is specifically configured to select, from the plurality of groups of uplink quality of service profiles, the target data packet delay budget of the uplink quality of service flow based on the current data transmission latency of the uplink quality of service flow. The target data packet delay budget of the uplink quality of service flow is greater than the current data transmission latency of the uplink quality of service flow. The processing unit 820 is specifically configured to select, from the plurality of groups of downlink quality of service profiles, the target data packet delay budget of the downlink quality of service flow based on the target data packet delay budget of the uplink quality of service flow and the round-trip latency requirement.

Optionally, when the current data transmission latency of the downlink quality of service flow is greater than the data packet delay budget of the downlink quality of service flow, the processing unit 820 is specifically configured to select, from the plurality of groups of downlink quality of service profiles, the target data packet delay budget of the downlink quality of service flow based on the current data transmission latency of the downlink quality of service flow. The target data packet delay budget of the downlink quality of service flow is greater than the current data transmission latency of the downlink quality of service flow. The processing unit 820 is specifically configured to select, from the plurality of groups of uplink quality of service profiles, the target data packet delay budget of the uplink quality of service flow based on the target data packet delay budget of the downlink quality of service flow and the round-trip latency requirement.

Optionally, the processing unit 820 is specifically configured to generate a plurality of quality of service profile pairs based on the round-trip latency requirement, the plurality of groups of uplink quality of service profiles, and the plurality of groups of downlink quality of service profiles. Each quality of service profile pair includes an uplink quality of service profile and a downlink quality of service profile. In each quality of service profile pair, a sum of a data packet delay budget that is of the uplink quality of service flow and that is in the uplink quality of service profile and a data packet delay budget that is of the downlink quality of service flow and that is in the downlink quality of service profile satisfies the round-trip latency requirement. Data packet delay budgets that are of the uplink quality of service flow and that are included in the plurality of quality of service profile pairs include the target data packet delay budget of the uplink quality of service flow. Data packet delay budgets that are of the downlink quality of service flow and that are included in the plurality of quality of service profile pairs include the target data packet delay budget of the downlink quality of service flow. The processing unit 820 is specifically configured to select a target quality of service profile pair from the plurality of quality of service profile pairs. The target quality of service profile pair includes the data packet delay budget of the uplink quality of service flow and the target data packet delay budget of the downlink quality of service flow.

Optionally, when the current data transmission latency of the uplink quality of service flow is greater than the data packet delay budget of the uplink quality of service flow, the processing unit 820 is specifically configured to select, from the at least two uplink budget values, the target data packet delay budget of the uplink quality of service flow based on the current data transmission latency of the uplink quality of service flow. The target data packet delay budget of the uplink quality of service flow is greater than the current data transmission latency of the uplink quality of service flow. The processing unit 820 is specifically configured to select, from the at least two downlink budget values, the target data packet delay budget of the downlink quality of service flow based on the target data packet delay budget of the uplink quality of service flow and the round-trip latency requirement of the service.

Optionally, when the current data transmission latency of the downlink quality of service flow is greater than the data packet delay budget of the downlink quality of service flow, the processing unit 820 is specifically configured to select, from the at least two downlink budget values, the target data packet delay budget of the downlink quality of service flow based on the current data transmission latency of the downlink quality of service flow. The target data packet delay budget of the downlink quality of service flow is greater than the current data transmission latency of the downlink quality of service flow. The processing unit 820 is specifically configured to select, from the at least two uplink budget values, the target data packet delay budget of the uplink quality of service flow based on the target data packet delay budget of the downlink quality of service flow and the round-trip latency requirement of the service.

Optionally, the transceiver unit 810 is further configured to receive the round-trip latency requirement from the session management network element.

Optionally, the processing unit 820 is specifically configured to select a target quality of service profile pair from the plurality of quality of service profile pairs. The target quality of service profile pair includes the data packet delay budget of the uplink quality of service flow and the target data packet delay budget of the downlink quality of service flow. The target data packet delay budget of the uplink quality of service flow is greater than or equal to the current data transmission latency of the uplink quality of service flow. The target data packet delay budget of the downlink quality of service flow is greater than or equal to the current data transmission latency of the downlink quality of service flow.

Optionally, the transceiver unit 810 and/or the processing unit 820 are/is further configured to obtain the current data transmission latency of the uplink quality of service flow and the current data transmission latency of the downlink quality of service flow.

Optionally, the processing unit 820 is specifically configured to measure an air interface latency of the uplink quality of service flow and an air interface latency of the downlink quality of service flow; determine the current data transmission latency of the uplink quality of service flow based on the air interface latency of the uplink quality of service flow and a core network data packet delay budget of the uplink quality of service flow; and determine the current data transmission latency of the downlink quality of service flow based on the air interface latency of the downlink quality of service flow and a core network data packet delay budget of the downlink quality of service flow.

Optionally, the processing unit 820 is specifically configured to measure an air interface latency of the uplink quality of service flow and an air interface latency of the downlink quality of service flow. The transceiver unit 810 is specifically configured to receive, from a user plane function network element or the session management network element, a current core network data transmission latency of the uplink quality of service flow and a current core network data transmission latency of the downlink quality of service flow. The processing unit 820 is specifically configured to determine the current data transmission latency of the uplink quality of service flow based on the air interface latency of the uplink quality of service flow and the current core network data transmission latency of the uplink quality of service flow; and determine the current data transmission latency of the downlink quality of service flow based on the air interface latency of the downlink quality of service flow and the current core network data transmission latency of the downlink quality of service flow.

Optionally, the transceiver unit 810 is further configured to receive latency control indication information from the session management network element. The latency control indication information triggers the access network element to determine, from the profile of the uplink quality of service flow and the profile of the downlink quality of service flow, the target data packet delay budget of the uplink quality of service flow and the target data packet delay budget of the downlink quality of service flow. The processing unit 820 is specifically configured to determine, from the profile of the uplink quality of service flow and the profile of the downlink quality of service flow, the target data packet delay budget of the uplink quality of service flow and the target data packet delay budget of the downlink quality of service flow based on the latency control indication information.

Optionally, the transceiver unit 810 is further configured to receive association indication information from the session management network element. The association indication information indicates that the uplink quality of service flow is associated with the downlink quality of service flow. The processing unit 820 is further configured to determine, based on the association indication information, that the uplink quality of service flow and the downlink quality of service flow are respectively for transmitting the uplink data and the downlink data of the service.

It may be understood that a specific process in which the units perform the foregoing corresponding steps is described in detail in the foregoing method embodiments. For brevity, details are not described herein.

In a design, the apparatus 800 is configured to perform actions performed by the policy control network element in the foregoing method embodiments.

The transceiver unit 810 is configured to receive a round-trip latency requirement of a service. The processing unit 820 is configured to generate a parameter of an uplink quality of service flow and a parameter of a downlink quality of service flow based on the round-trip latency requirement. The uplink quality of service flow and the downlink quality of service flow are respectively for transmitting uplink data and downlink data of the service. The transceiver unit 810 is further configured to send the parameter of the uplink quality of service flow and the parameter of the downlink quality of service flow to a session management network element.

Optionally, the processing unit 820 is further configured to determine, based on the round-trip latency requirement, to create the uplink quality of service flow and the downlink quality of service flow for the service.

Optionally, the transceiver unit 810 is further configured to send the round-trip latency requirement to the session management network element.

It may be understood that a specific process in which the units perform the foregoing corresponding steps is described in detail in the foregoing method embodiments. For brevity, details are not described herein.

In a design, the apparatus 800 is configured to perform actions performed by the session management network element in the foregoing method embodiments.

The transceiver unit 810 is configured to receive, from a policy control network element, a parameter of an uplink quality of service flow and a parameter of a downlink quality of service flow. The uplink quality of service flow and the downlink quality of service flow are respectively for transmitting uplink data and downlink data of a service. The parameter of the uplink quality of service flow and the parameter of the downlink quality of service flow satisfy a round-trip latency requirement of the service. The processing unit 810 is configured to send, to an access network element, a profile of the uplink quality of service flow and a profile of the downlink quality of service flow based on the parameter of the uplink quality of service flow and the parameter of the downlink quality of service flow.

Optionally, the processing unit 820 is further configured to generate the profile of the uplink quality of service flow and the profile of the downlink quality of service flow based on the parameter of the uplink quality of service flow and the parameter of the downlink quality of service flow.

Optionally, the transceiver unit 810 is further configured to send latency control indication information to the access network element. The latency control indication information triggers the access network element to determine, from the profile of the uplink quality of service flow and the profile of the downlink quality of service flow, a target data packet delay budget of the uplink quality of service flow and a target data packet delay budget of the downlink quality of service flow.

Optionally, the transceiver unit 810 is further configured to send association indication information to the access network element. The association indication information indicates that the uplink quality of service flow is associated with the downlink quality of service flow.

It may be understood that a specific process in which the units perform the foregoing corresponding steps is described in detail in the foregoing method embodiments. For brevity, details are not described herein.

It may be further understood that the apparatus 800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the terminal device in the foregoing embodiments, and may be configured to perform the procedures and/or the steps corresponding to the terminal device in the foregoing method embodiments. Alternatively, the apparatus 800 may be specifically the network device in the foregoing embodiments, and may be configured to perform the procedures and/or the steps corresponding to the network device in the foregoing method embodiments. To avoid repetition, details are not described herein again.

The apparatus 800 in each of the foregoing solutions has a function of implementing a corresponding step performed by the access network element in the foregoing methods. Alternatively, the apparatus 800 in each of the foregoing solutions has a function of implementing a corresponding step performed by the policy control network element in the foregoing methods. Alternatively, the apparatus 800 in each of the foregoing solutions has a function of implementing a corresponding step performed by the session management network element in the foregoing methods. The function may be implemented by hardware, or may be implemented by hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to separately perform sending and receiving operations and a related processing operation in the method embodiments.

In addition, the transceiver unit 810 may alternatively be a transceiver circuit (for example, the transceiver circuit may include a receiver circuit and a transmitter circuit), and the processing unit may be a processing circuit.

It should be noted that the apparatus in FIG. 9 may be the network element or the device in the foregoing embodiment, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a schematic diagram of another latency control apparatus 900 to which this application is applicable. The apparatus 900 includes a processor 910. The processor 910 is coupled to a memory 920. The memory 920 is configured to store a computer program or instructions and/or data. The processor 910 is configured to execute the computer program or the instructions stored in the memory 920, or read the data stored in the memory 920, to perform the methods in the foregoing method embodiments.

Optionally, there are one or more processors 910.

Optionally, there are one or more memories 920.

Optionally, the memory 920 and the processor 910 are integrated together, or are disposed separately.

Optionally, as shown in FIG. 10, the apparatus 900 further includes a transceiver 930, and the transceiver 930 is configured to receive and/or send a signal. For example, the processor 910 is configured to control the transceiver 930 to receive and/or send a signal.

In a solution, the apparatus 900 is configured to implement operations performed by the access network element in the foregoing method embodiments.

For example, the processor 910 is configured to execute the computer program or the instructions stored in the memory 920, to implement the related operations of the access network element in the foregoing method embodiments, for example, the method performed by the access network element or the RAN in the embodiment shown in any one of FIG. 2 to FIG. 8A and FIG. 8B.

In a solution, the apparatus 900 is configured to implement operations performed by the policy control network element in the foregoing method embodiments.

For example, the processor 910 is configured to execute the computer program or the instructions stored in the memory 920, to implement the related operations of the policy control network element in the foregoing method embodiments, for example, the method performed by the policy control network element or the PCF in the embodiment shown in any one of FIG. 2 to FIG. 8A and FIG. 8B.

In a solution, the apparatus 900 is configured to implement operations performed by the session management network element in the foregoing method embodiments.

For example, the processor 910 is configured to execute the computer program or the instructions stored in the memory 920, to implement the related operations of the session management network element in the foregoing method embodiments, for example, the method performed by the session management network element or the SMF in the embodiment shown in any one of FIG. 2 to FIG. 8A and FIG. 8B.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It may be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

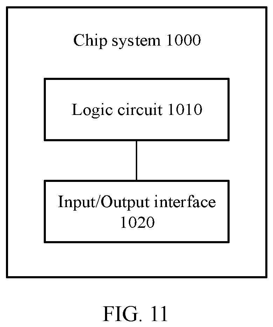

FIG. 11 is a schematic diagram of a chip system 1000 to which this application is applicable. The chip system 1000 (which may also be referred to as a processing system) includes a logic circuit 1010 and an input/output interface (input/output interface) 1020.

The logic circuit 1010 may be a processing circuit in the chip system 1000. The logic circuit 1010 may be coupled to a storage unit, and invoke instructions in the storage unit, to enable the chip system 1000 to implement the methods and functions in embodiments of this application. The input/output interface 1020 may be an input/output circuit in the chip system 1000, and output information processed by the chip system 1000, or input to-be-processed data or signaling information to the chip system 1000 for processing.

Specifically, for example, if the chip system 1000 is installed in an access network element, the logic circuit 1010 is coupled to the input/output interface 1020, and the logic circuit 1010 may send a message to a policy control network element or a session management network element through the input/output interface 1020. The message may be generated by the logic circuit 1010. Alternatively, the input/output interface 1020 may input a message from the policy control network element or the session management network element to the logic circuit 1010 for processing. For another example, if the chip system 1000 is installed in a policy control network element, the logic circuit 1010 is coupled to the input/output interface 1020, and the logic circuit 1010 may send a message to an access network element or a session management network element through the input/output interface 1020. The message may be generated by the logic circuit 1010. Alternatively, the input/output interface 1020 may input a message from the access network element or the session management network element to the logic circuit 1010 for processing. For another example, if the chip system 1000 is installed in a session management network element, the logic circuit 1010 is coupled to the input/output interface 1020, and the logic circuit 1010 may send a message to an access network element or a policy control network element through the input/output interface 1020. The message may be generated by the logic circuit 1010. Alternatively, the input/output interface 1020 may input a message from the access network element or the policy control network element to the logic circuit 1010 for processing.

In a solution, the chip system 1000 is configured to implement operations performed by the access network element in the foregoing method embodiments.

For example, the logic circuit 1010 is configured to implement a processing-related operation performed by the access network element in the foregoing method embodiments, for example, a processing-related operation performed by the access network element or the RAN in the embodiment shown in any one of FIG. 2 to FIG. 8A and FIG. 8B. The input/output interface 1020 is configured to implement a sending and/or receiving-related operation performed by the access network element in the foregoing method embodiments, for example, a sending and/or receiving-related operation performed by the access network element or the RAN in the embodiment shown in any one of FIG. 2 to FIG. 8A and FIG. 8B.

In a solution, the chip system 1000 is configured to implement operations performed by the policy control network element in the foregoing method embodiments.

For example, the logic circuit 1010 is configured to implement a processing-related operation performed by the policy control network element in the foregoing method embodiments, for example, a processing-related operation performed by the policy control network element or the PCF in the embodiment shown in any one of FIG. 2 to FIG. 8A and FIG. 8B. The input/output interface 1020 is configured to implement a sending and/or receiving-related operation performed by the policy control network element in the foregoing method embodiments, for example, a sending and/or receiving-related operation performed by the policy control network element or the PCF in the embodiment shown in any one of FIG. 2 to FIG. 8A and FIG. 8B.

In a solution, the chip system 1000 is configured to implement operations performed by the session management network element in the foregoing method embodiments.

For example, the logic circuit 1010 is configured to implement a processing-related operation performed by the session management network element in the foregoing method embodiments, for example, a processing-related operation performed by the session management network element or the SMF in the embodiment shown in any one of FIG. 2 to FIG. 8A and FIG. 8B. The input/output interface 1020 is configured to implement a sending and/or receiving-related operation performed by the session management network element in the foregoing method embodiments, for example, a sending and/or receiving-related operation performed by the session management network element or the SMF in the embodiment shown in any one of FIG. 2 to FIG. 8A and FIG. 8B.

An embodiment of this application further provides a computer-readable storage medium. The computer-readable storage medium stores computer instructions used to implement the method performed by the access network element, the policy control network element, or the session management network element in the foregoing method embodiments.

For example, when the computer program is executed by a computer, the computer is enabled to implement the method performed by the access network element, the policy control network element, or the session management network element in the foregoing method embodiments.

An embodiment of this application further provides a computer program product, including instructions. When the instructions are executed by a computer, the method performed by the access network element, the policy control network element, or the session management network element in the foregoing method embodiments is implemented.

An embodiment of this application further provides a communication system. The communication system includes the access network element, the session management network element, and the policy control network element in the foregoing embodiments. For example, the system includes the access network element or the RAN and the policy control network element or the PCF in the embodiment shown in any one of FIG. 2 to FIG. 8A and FIG. 8B.

Optionally, the communication system further includes the session management network element. For example, the system includes the session management network element or the SMF in the embodiment shown in any one of FIG. 2 to FIG. 8A and FIG. 8B.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A latency control method, comprising:
receiving, by an access network element from a session management network element, a profile of an uplink quality of service flow and a profile of a downlink quality of service flow, wherein the uplink quality of service flow and the downlink quality of service flow are respectively for transmitting uplink data and downlink data of a service; and
when a sum of a current data transmission latency of the uplink quality of service flow and a current data transmission latency of the downlink quality of service flow does not satisfy a round-trip latency requirement of the service, determining, by the access network element from the profile of the uplink quality of service flow and the profile of the downlink quality of service flow, a target data packet delay budget of the uplink quality of service flow and a target data packet delay budget of the downlink quality of service flow, wherein the target data packet delay budget of the uplink quality of service flow and the target data packet delay budget of the downlink quality of service flow satisfy the round-trip latency requirement.

2. The method according to claim 1, wherein
the profile of the uplink quality of service flow comprises a plurality of groups of uplink quality of service profiles, the profile of the downlink quality of service flow comprises a plurality of groups of downlink quality of service profiles, each group of uplink quality of service profiles comprises a data packet delay budget of the uplink quality of service flow, and each group of downlink quality of service profiles comprises a data packet delay budget of the downlink quality of service flow, wherein data packet delay budgets that are of the uplink quality of service flow and that are comprised in the plurality of groups of uplink quality of service profiles comprise the target data packet delay budget of the uplink quality of service flow, and data packet delay budgets that are of the downlink quality of service flow and that are comprised in the plurality of groups of downlink quality of service profiles comprise the target data packet delay budget of the downlink quality of service flow; and
that the target data packet delay budget of the uplink quality of service flow and the target data packet delay budget of the downlink quality of service flow satisfy the round-trip latency requirement comprises:
a sum of the target data packet delay budget of the uplink quality of service flow and the target data packet delay budget of the downlink quality of service flow satisfies the round-trip latency requirement.

3. The method according to claim 2, wherein
when the current data transmission latency of the uplink quality of service flow is greater than the data packet delay budget of the uplink quality of service flow, the determining, by the access network element from the profile of the uplink quality of service flow and the profile of the downlink quality of service flow, a target data packet delay budget of the uplink quality of service flow and a target data packet delay budget of the downlink quality of service flow comprises:
selecting, by the access network element from the plurality of groups of uplink quality of service profiles, the target data packet delay budget of the uplink quality of service flow based on the current data transmission latency of the uplink quality of service flow, wherein the target data packet delay budget of the uplink quality of service flow is greater than the current data transmission latency of the uplink quality of service flow; and
selecting, by the access network element from the plurality of groups of downlink quality of service profiles, the target data packet delay budget of the downlink quality of service flow based on the target data packet delay budget of the uplink quality of service flow and the round-trip latency requirement.

4. The method according to claim 2, wherein
when the current data transmission latency of the downlink quality of service flow is greater than the data packet delay budget of the downlink quality of service flow, the determining, by the access network element from the profile of the uplink quality of service flow and the profile of the downlink quality of service flow, a target data packet delay budget of the uplink quality of service flow and a target data packet delay budget of the downlink quality of service flow comprises:
selecting, by the access network element from the plurality of groups of downlink quality of service profiles, the target data packet delay budget of the downlink quality of service flow based on the current data transmission latency of the downlink quality of service flow, wherein the target data packet delay budget of the downlink quality of service flow is greater than the current data transmission latency of the downlink quality of service flow; and
selecting, by the access network element from the plurality of groups of uplink quality of service profiles, the target data packet delay budget of the uplink quality of service flow based on the target data packet delay budget of the downlink quality of service flow and the round-trip latency requirement.

5. The method according to claim 2, wherein the determining, by the access network element from the profile of the uplink quality of service flow and the profile of the downlink quality of service flow, a target data packet delay budget of the uplink quality of service flow and a target data packet delay budget of the downlink quality of service flow comprises:
generating, by the access network element, a plurality of quality of service profile pairs based on the round-trip latency requirement, the plurality of groups of uplink quality of service profiles, and the plurality of groups of downlink quality of service profiles, wherein each quality of service profile pair comprises an uplink quality of service profile and a downlink quality of service profile, wherein in each quality of service profile pair, a sum of a data packet delay budget that is of the uplink quality of service flow and that is in the uplink quality of service profile and a data packet delay budget that is of the downlink quality of service flow and that is in the downlink quality of service profile satisfies the round-trip latency requirement, data packet delay budgets that are of the uplink quality of service flow and that are comprised in the plurality of quality of service profile pairs comprise the target data packet delay budget of the uplink quality of service flow, and data packet delay budgets that are of the downlink quality of service flow and that are comprised in the plurality of quality of service profile pairs comprise the target data packet delay budget of the downlink quality of service flow; and
selecting, by the access network element, a target quality of service profile pair from the plurality of quality of service profile pairs, wherein the target quality of service profile pair comprises the target data packet delay budget of the uplink quality of service flow and the target data packet delay budget of the downlink quality of service flow.

6. The method according to claim 1, wherein
the profile of the uplink quality of service flow comprises at least two uplink budget values of a data packet delay budget of the uplink quality of service flow, the profile of the downlink quality of service flow comprises at least two downlink budget values of a data packet delay budget of the downlink quality of service flow, the at least two uplink budget values comprise the target data packet delay budget of the uplink quality of service flow, and the at least two downlink budget values comprise the target data packet delay budget of the downlink quality of service flow.

7. The method according to claim 6, wherein
when the current data transmission latency of the uplink quality of service flow is greater than the data packet delay budget of the uplink quality of service flow, the determining, by the access network element from the profile of the uplink quality of service flow and the profile of the downlink quality of service flow, a target data packet delay budget of the uplink quality of service flow and a target data packet delay budget of the downlink quality of service flow comprises:
selecting, by the access network element from the at least two uplink budget values, the target data packet delay budget of the uplink quality of service flow based on the current data transmission latency of the uplink quality of service flow, wherein the target data packet delay budget of the uplink quality of service flow is greater than the current data transmission latency of the uplink quality of service flow; and
selecting, by the access network element from the at least two downlink budget values, the target data packet delay budget of the downlink quality of service flow based on the target data packet delay budget of the uplink quality of service flow and the round-trip latency requirement of the service.

8. The method according to claim 6, wherein
when the current data transmission latency of the downlink quality of service flow is greater than the data packet delay budget of the downlink quality of service flow, the determining, by the access network element from the profile of the downlink quality of service flow and the profile of the uplink quality of service flow, a target data packet delay budget of the uplink quality of service flow and a target data packet delay budget of the downlink quality of service flow comprises:
selecting, by the access network element from the at least two downlink budget values, the target data packet delay budget of the downlink quality of service flow based on the current data transmission latency of the downlink quality of service flow, wherein the target data packet delay budget of the downlink quality of service flow is greater than the current data transmission latency of the downlink quality of service flow; and
selecting, by the access network element from the at least two uplink budget values, the target data packet delay budget of the uplink quality of service flow based on the target data packet delay budget of the downlink quality of service flow and the round-trip latency requirement of the service.

9. The method according to any one of claims 1 to 8, wherein the method further comprises:
receiving, by the access network element, the round-trip latency requirement from the session management network element.

10. The method according to claim 2, wherein
the profile of the uplink quality of service flow and the profile of the downlink quality of service flow comprise a plurality of quality of service profile pairs, wherein each quality of service profile pair comprises an uplink quality of service profile and a downlink quality of service profile, wherein in each quality of service profile pair, a sum of a data packet delay budget that is of the uplink quality of service flow and that is in the uplink quality of service profile and a data packet delay budget that is of the downlink quality of service flow and that is in the downlink quality of service profile satisfies the round-trip latency requirement, data packet delay budgets that are of the uplink quality of service flow and that are comprised in the plurality of quality of service profile pairs comprise the target data packet delay budget of the uplink quality of service flow, and data packet delay budgets that are of the downlink quality of service flow and that are comprised in the plurality of quality of service profile pairs comprise the target data packet delay budget of the downlink quality of service flow.

11. The method according to claim 10, wherein the determining, by the access network element from the profile of the uplink quality of service flow and the profile of the downlink quality of service flow, a target data packet delay budget of the uplink quality of service flow and a target data packet delay budget of the downlink quality of service flow comprises:
selecting, by the access network element, a target quality of service profile pair from the plurality of quality of service profile pairs, wherein the target quality of service profile pair comprises the target data packet delay budget of the uplink quality of service flow and the target data packet delay budget of the downlink quality of service flow, wherein
the target data packet delay budget of the uplink quality of service flow is greater than or equal to the current data transmission latency of the uplink quality of service flow, and the target data packet delay budget of the downlink quality of service flow is greater than or equal to the current data transmission latency of the downlink quality of service flow.

12. The method according to any one of claims 1 to 11, wherein the method further comprises:
obtaining, by the access network element, the current data transmission latency of the uplink quality of service flow and the current data transmission latency of the downlink quality of service flow.

13. The method according to claim 12, wherein the obtaining, by the access network element, the current data transmission latency of the uplink quality of service flow and the current data transmission latency of the downlink quality of service flow comprises:
measuring, by the access network element, an air interface latency of the uplink quality of service flow and an air interface latency of the downlink quality of service flow;
determining, by the access network element, the current data transmission latency of the uplink quality of service flow based on the air interface latency of the uplink quality of service flow and a core network data packet delay budget of the uplink quality of service flow; and
determining, by the access network element, the current data transmission latency of the downlink quality of service flow based on the air interface latency of the downlink quality of service flow and a core network data packet delay budget of the downlink quality of service flow;
or
measuring, by the access network element, an air interface latency of the uplink quality of service flow and an air interface latency of the downlink quality of service flow;
receiving, by the access network element from a user plane function network element or the session management network element, a current core network data transmission latency of the uplink quality of service flow and a current core network data transmission latency of the downlink quality of service flow;
determining, by the access network element, the current data transmission latency of the uplink quality of service flow based on the air interface latency of the uplink quality of service flow and the current core network data transmission latency of the uplink quality of service flow; and
determining, by the access network element, the current data transmission latency of the downlink quality of service flow based on the air interface latency of the downlink quality of service flow and the current core network data transmission latency of the downlink quality of service flow.

14. The method according to any one of claims 1 to 13, wherein the method further comprises:
receiving, by the access network element, latency control indication information from the session management network element, wherein the latency control indication information triggers the access network element to determine, from the profile of the uplink quality of service flow and the profile of the downlink quality of service flow, the target data packet delay budget of the uplink quality of service flow and the target data packet delay budget of the downlink quality of service flow; and
the determining, by the access network element from the profile of the uplink quality of service flow and the profile of the downlink quality of service flow, a target data packet delay budget of the uplink quality of service flow and a target data packet delay budget of the downlink quality of service flow comprises:
determining, by the access network element from the profile of the uplink quality of service flow and the profile of the downlink quality of service flow, the target data packet delay budget of the uplink quality of service flow and the target data packet delay budget of the downlink quality of service flow based on the latency control indication information.

15. The method according to any one of claims 1 to 14, wherein the method further comprises:
receiving, by the access network element, association indication information from the session management network element, wherein the association indication information indicates that the uplink quality of service flow is associated with the downlink quality of service flow; and
determining, by the access network element based on the association indication information, that the uplink quality of service flow and the downlink quality of service flow are respectively for transmitting the uplink data and the downlink data of the service.

16. The method according to any one of claims 1 to 15, wherein
a sum of a largest value of the data packet delay budgets in the profile of the uplink quality of service flow and a smallest value of the data packet delay budgets in the profile of the downlink quality of service flow is less than or equal to the round-trip latency requirement, and a sum of a smallest value of the data packet delay budgets in the profile of the uplink quality of service flow and a largest value of the data packet delay budgets in the profile of the downlink quality of service flow is less than or equal to the round-trip latency requirement.

17. A latency control method, comprising:
receiving, by a policy control network element, a round-trip latency requirement of a service;
generating, by the policy control network element, a parameter of an uplink quality of service flow and a parameter of a downlink quality of service flow based on the round-trip latency requirement, wherein the uplink quality of service flow and the downlink quality of service flow are respectively for transmitting uplink data and downlink data of the service; and
sending, by the policy control network element, the parameter of the uplink quality of service flow and the parameter of the downlink quality of service flow to a session management network element.

18. The method according to claim 17, wherein the method further comprises:
determining, by the policy control network element based on the round-trip latency requirement, to create the uplink quality of service flow and the downlink quality of service flow for the service.

19. The method according to claim 17 or 18, wherein the method further comprises:
sending, by the policy control network element, the round-trip latency requirement to the session management network element.

20. The method according to any one of claims 17 to 19, wherein
the parameter of the uplink quality of service flow comprises a plurality of groups of uplink quality of service parameters, the parameter of the downlink quality of service flow comprises a plurality of groups of downlink quality of service parameters, each group of uplink quality of service parameters comprises a data packet delay budget of the uplink quality of service flow, and each group of downlink quality of service parameters comprises a data packet delay budget of the downlink quality of service flow.

21. The method according to claim 20, wherein
the parameter of the uplink quality of service flow and the parameter of the downlink quality of service flow comprise a plurality of quality of service parameter pairs, each quality of service parameter pair comprises an uplink quality of service parameter and a downlink quality of service parameter, and a sum of a data packet delay budget in the uplink quality of service parameter comprised in each quality of service parameter pair and a data packet delay budget in the downlink quality of service parameter comprised in each quality of service parameter pair satisfies the round-trip latency requirement.

22. The method according to claim 17, wherein
the parameter of the uplink quality of service flow comprises at least two uplink budget values of a data packet delay budget of the uplink quality of service flow, and the parameter of the downlink quality of service flow comprises at least two downlink budget values of a data packet delay budget of the downlink quality of service flow.

23. The method according to any one of claims 17 to 22, wherein
a sum of a largest value of the data packet delay budgets in the parameter of the uplink quality of service flow and a smallest value of the data packet delay budgets in the parameter of the downlink quality of service flow is less than or equal to the round-trip latency requirement, and a sum of a smallest value of the data packet delay budgets in the parameter of the uplink quality of service flow and a largest value of the data packet delay budgets in the parameter of the downlink quality of service flow is less than or equal to the round-trip latency requirement.

24. A latency control method, comprising:
receiving, by a session management network element from a policy control network element, a parameter of an uplink quality of service flow and a parameter of a downlink quality of service flow, wherein the uplink quality of service flow and the downlink quality of service flow are respectively for transmitting uplink data and downlink data of a service, and the parameter of the uplink quality of service flow and the parameter of the downlink quality of service flow satisfy a round-trip latency requirement of the service; and
sending, by the session management network element to an access network element, a profile of the uplink quality of service flow and a profile of the downlink quality of service flow based on the parameter of the uplink quality of service flow and the parameter of the downlink quality of service flow.

25. The method according to claim 24, wherein the method further comprises:
generating, by the session management network element, the profile of the uplink quality of service flow and the profile of the downlink quality of service flow based on the parameter of the uplink quality of service flow and the parameter of the downlink quality of service flow.

26. The method according to claim 24 or 25, wherein
the profile of the uplink quality of service flow comprises a plurality of groups of uplink quality of service profiles, the profile of the downlink quality of service flow comprises a plurality of groups of downlink quality of service parameters, each group of uplink quality of service profiles comprises a data packet delay budget, and each group of the downlink quality of service profiles comprises a data packet delay budget.

27. The method according to claim 24, wherein
the profile of the uplink quality of service flow comprises at least two uplink budget values of a data packet delay budget of the uplink quality of service flow, and the profile of the downlink quality of service flow comprises at least two downlink budget values of a data packet delay budget of the uplink quality of service flow.

28. The method according to any one of claims 24 to 27, wherein the method further comprises:
sending, by the session management network element, the round-trip latency requirement to the access network element.

29. The method according to claim 27, wherein
the parameter of the uplink quality of service flow and the parameter of the downlink quality of service flow comprise a plurality of quality of service parameter pairs, each quality of service parameter pair comprises an uplink quality of service parameter and a downlink quality of service parameter, and a sum of a data packet delay budget in the uplink quality of service parameter comprised in each quality of service parameter pair and a data packet delay budget in the downlink quality of service parameter comprised in each quality of service parameter pair satisfies the round-trip latency requirement; and
the profile of the uplink quality of service flow and the profile of the downlink quality of service flow comprise a plurality of quality of service profile pairs, each quality of service profile pair comprises an uplink quality of service profile and a downlink quality of service profile, and a sum of a data packet delay budget in the uplink quality of service profile comprised in each quality of service profile pair and a data packet delay budget in the downlink quality of service profile comprised in each quality of service profile pair satisfies the round-trip latency requirement.

30. The method according to any one of claims 24 to 29, wherein the method further comprises:
sending, by the session management network element, latency control indication information to the access network element, wherein the latency control indication information triggers the access network element to determine, from the profile of the uplink quality of service flow and the profile of the downlink quality of service flow, a target data packet delay budget of the uplink quality of service flow and a target data packet delay budget of the downlink quality of service flow.

31. The method according to any one of claims 24 to 30, wherein the method further comprises:
sending, by the session management network element, association indication information to the access network element, wherein the association indication information indicates that the uplink quality of service flow is associated with the downlink quality of service flow.

32. The method according to any one of claims 24 to 31, wherein
a sum of a largest value of the data packet delay budgets in the parameter of the uplink quality of service flow and a smallest value of the data packet delay budgets in the parameter of the downlink quality of service flow is less than or equal to the round-trip latency requirement, and a sum of a smallest value of the data packet delay budgets in the parameter of the uplink quality of service flow and a largest value of the data packet delay budgets in the parameter of the downlink quality of service flow is less than or equal to the round-trip latency requirement; and
a sum of a largest value of the data packet delay budgets in the profile of the uplink quality of service flow and a smallest value of the data packet delay budgets in the profile of the downlink quality of service flow is less than or equal to the round-trip latency requirement, and a sum of a smallest value of the data packet delay budgets in the profile of the uplink quality of service flow and a largest value of the data packet delay budgets in the profile of the downlink quality of service flow is less than or equal to the round-trip latency requirement.

33. A computer-readable storage medium, wherein the computer-readable storage medium stores instructions, and when the computer instructions are run on a computer, the computer is enabled to perform the method according to any one of claims 1 to 16, perform the method according to any one of claims 17 to 23, or perform the method according to any one of claims 24 to 32.

34. A chip, comprising:
a memory, configured to store a computer program; and
a processor, configured to read and execute the computer program stored in the memory, wherein when the computer program is executed, the processor performs the method according to any one of claims 1 to 16, performs the method according to any one of claims 17 to 23, or performs the method according to any one of claims 24 to 32.

35. A computer program product, wherein the computer program product compri ses computer program code, and when the computer program code is run on a computer, the computer is enabled to perform the method according to any one of claims 1 to 16, perform the method according to any one of claims 17 to 23, or perform the method according to any one of claims 24 to 32.

36. A latency control method, comprising:
sending, by a policy control network element to a session management network element, a parameter of an uplink quality of service flow and a parameter of a downlink quality of service flow, wherein the uplink quality of service flow and the downlink quality of service flow are respectively for transmitting uplink data and downlink data of a service, and the parameter of the uplink quality of service flow and the parameter of the downlink quality of service flow satisfy a round-trip latency requirement of the service; and
sending, by the session management network element to an access network element, a profile of the uplink quality of service flow and a profile of the downlink quality of service flow based on the parameter of the uplink quality of service flow and the parameter of the downlink quality of service flow.
